# EUROPEAN PATENT APPLICATION

(11) **EP 2 621 231 A1**
(43) Date of publication of application: **31.07.2013**
(21) Application number: 12832705.3
(22) Date of filing: 24.08.2012
(51) Int. Cl.: H04W 68/00, H04W 48/06

(54) **RECEIPT CONTROL SYSTEM, RECEIPT CONTROL APPARATUS, RECEIPT CONTROL TARGET TERMINAL DETERMINING APPARATUS, AND RECEIPT CONTROL METHOD**

(30) Priority: 28.09.2011 JP 2011212319; 25.01.2012 JP 2012012909; 03.02.2012 JP 2012021950
(71) Applicant: NEC Corporation, Tokyo 108-8001 (JP)
(72) Inventor: MAGATANI, Hironori, Tokyo 108-8001 (JP); ITO, Takahiro, Tokyo 108-8001 (JP); IWAI, Takanori, Tokyo 108-8001 (JP)
(74) Representative: MacDougall, Alan John Shaw
(86) International application number: PCT/JP2012/005334
(87) International publication number: WO 2013/046532

(57) **Abstract**

An incoming call control system according to the present invention includes: communication start request reception means that receives a communication start request transmitted from a radio communication terminal; determination means that determines whether the radio communication terminal related to the received communication start request is a terminal which is a target of paging suppression; holding means that holds information for identifying the radio communication terminal as paging suppression target terminal information when the determination means determines that the terminal is the target of paging suppression; packet reception means that receives a packet from a network side; and determination means that determines whether to suppress paging to a radio communication terminal related to the received packet based on the paging suppression target terminal information.

## Description

### Technical Field

The present invention relates to a mobile communication system including an incoming call control function.

### Background Art

Non-patent literature 1 and Non-patent literature 2 disclose the detail of a flow of paging processing when packers are received from a network in mobile communication systems in which standardization has recently been promoted.

For example, Non-patent literature 1 discloses, in the item 9.2.2.2.1 (Successful Network-Requested PDP Context Activation Procedure), the detail of a flow of connection processing when a gateway GPRS support node (GGSN) receives PDP PDU from a network. Further, Non-patent literature 2 discloses, in the item 5.3.4.3 (Network Triggered Service Request), the detail of a flow of connection processing when a PDN gateway (P-GW) receives Downlink Data from a network. In this way, incoming call processing is started when packets are received by a higher order apparatus arranged in a core network CN.

Further, a technique of suppressing arrival of incoming calls to mobile terminals in a mobile communication system has been developed. For example, Patent literature 1 discloses a technique of achieving suppression of arrival of incoming calls to mobile terminals that are within areas where the use of mobile terminals is prohibited (e.g., concert halls) without additionally providing a dedicated radio base station, resulting in a reduced facility cost. According to this technique, it is possible for a location registration signal receiver additionally provided in an area where the use of mobile terminals is prohibited to receive location registration signals transmitted from mobile terminals to transmit the signals to a telephone switchboard, thereby being able to control arrival of incoming calls based on the location registration signals received by the telephone switchboard.

Further, Patent literature 2 discloses a technique to quickly detect that a mobile terminal is moving at a high speed to quickly block an incoming call. According to this technique, the mobile terminal transmits location information calculated based on a GPS signal through a base station which is being in communication to a switchboard, and the switchboard calculates a moving speed based on the difference of location information to manage whether the terminal is moving at a high speed, thereby being able to perform control of arrival of the incoming call.

### Citation List

### Patent Literature

**Patent literature 1:** Japanese Unexamined Patent Application Publication No. 2000-236572
**Patent literature 2:** Japanese Unexamined Patent Application Publication No. 2001-326976

### Non Patent Literature

Non-patent literature 1: 3GPP TS 23.060 "General Packet Radio Service (GPRS); Service description; Stage 2"
Non-patent literature 2: 3GPP TS23.401 "General Packet Radio Service (GPRS) enhancements for Evolved Universal Terrestrial Radio Access Network (E-UTRAN) access"

### Summary of Invention

### Technical Problem

In the paging method disclosed in the aforementioned Non-patent literatures, paging processing is accepted without differentiating terminals when a packet is received. Assume here a case in which there are a large number of terminals on a network. In this case, if packets are received by the large number of terminals, large quantities of paging processing occur, which imposes an excessive load on the network or a processing apparatus and may cause congestion or a fault of an apparatus.

Since there is no need to receive calls or perform paging processing depending on the purpose of use of the terminal, it is necessary to reduce the load of the network and the apparatus by not performing the paging processing. However, according to the techniques disclosed in the aforementioned non-patent literatures, paging processing is accepted without differentiating terminals. There is no means to suppress paging, and an unnecessary load is imposed on the network or the processing apparatus.

In the incoming call control techniques according to the aforementioned Patent literatures 1 and 2, incoming calls are controlled based on location information indicating whether the mobile terminal is in an area where the use of mobile terminals is prohibited or the moving speed indicating whether the mobile terminal is moving at a high speed. In recent years, according to the spread of smartphones and the like, communication traffic has greatly been increased and it has been demanded to stably provide communication lines. However, in an incoming call control method based on such a control technique, it is difficult to provide technical bases to appropriately address with this problem while monitoring the congestion state and to flexibly address with this problem based on the content of contract between a carrier and a subscriber.

Further, in the technique disclosed in Patent literature 1, the location registration signal receiver needs to be located for each of areas where the use of mobile terminals is prohibited. Further, there is another problem that, while the telephone switchboard performs incoming call control on a mobile terminal which has transmitted a location registration signal when receiving location registration signals received from the base station and the location registration signal receiver at the same time, a high-quality determination mechanism is necessary in the telephone switchboard to determine whether these two location registration signals were received at the same time.

The present invention has been made in view of the aforementioned problems, and aims to provide an incoming call control system that reduces a processing load imposed on a network and a processing apparatus by suppressing occurrence of unnecessary paging processing, and an incoming call control apparatus, an incoming call control target terminal specifying apparatus, and an incoming call control method used in the system.

### Solution to Problem

An incoming call control system according to a first exemplary aspect of the present invention includes: communication start request reception means that receives a communication start request transmitted from a radio communication terminal; determination means that determines whether the radio communication terminal related to the received communication start request is a terminal which is a target of paging suppression; holding means that holds information for identifying the radio communication terminal as paging suppression target terminal information when the determination means determines that the terminal is the target of paging suppression; packet reception means that receives a packet from a network side; and determination means that determines whether to suppress paging to a radio communication terminal related to the received packet based on the paging suppression target terminal information.

Further, an incoming call control apparatus according to a second exemplary aspect of the present invention includes: holding means that holds paging suppression target terminal information regarding a radio communication terminal which is a target of paging suppression; packet reception means that receives a packet from a network side; and determination means that determines whether to suppress paging to a radio communication terminal related to the received packet based on the paging suppression target terminal information.

Further, an incoming call control target terminal specifying apparatus according to a third exemplary aspect of the present invention includes: communication start request reception means that receives a communication start request transmitted from a radio communication terminal; determination means that determines whether the radio communication terminal related to the received communication start request is a terminal which is a target of paging suppression; and notification means that notifies information for identifying the radio communication terminal as paging suppression target terminal information when the determination means determines that the terminal is the target of paging suppression.

Further, an incoming call control method according to a fourth exemplary aspect of the present invention includes: a holding step that holds paging suppression target terminal information regarding a radio communication terminal which is a target of paging suppression; a packet reception step that receives a packet from a network side; and a determination step that determines whether to suppress paging to a radio communication terminal related to the received packet based on the paging suppression target terminal information.

### Advantageous Effects of Invention

According to the present invention, it is possible to provide an incoming call control system that reduces a processing load imposed on a network and a processing apparatus by suppressing occurrence of unnecessary paging processing, and an incoming call control apparatus, an incoming call control target terminal specifying apparatus, and an incoming call control method used in the system.

### Brief Description of Drawings

Fig. 1 is a block diagram showing a configuration of an incoming call control apparatus according to a first exemplary embodiment;
Fig. 2 is a block diagram showing a whole configuration of a mobile communication system according to the first exemplary embodiment;
Fig. 3 is a block diagram showing a whole configuration of a mobile communication system according to a second exemplary embodiment;
Fig. 4 is a block diagram showing a configuration of a paging suppression target terminal specifying apparatus according to the second exemplary embodiment;
Fig. 5 is a block diagram showing a configuration of a paging suppression target terminal specifying apparatus according to a third exemplary embodiment;
Fig. 6 is a diagram showing one example of subscriber information;
Fig. 7 is a flowchart showing a flow of processing to determine whether a terminal is a paging suppression target terminal according to the third exemplary embodiment;
Fig. 8 is a block diagram showing a whole configuration of a mobile communication system according to a fourth exemplary embodiment;
Fig. 9 is a sequence diagram showing a flow to storage of paging suppression target terminal information according to the fourth exemplary embodiment;
Fig. 10 is a sequence diagram showing a flow of paging suppression processing according to the fourth exemplary embodiment;
Fig. 11 is a block diagram showing a whole configuration of a mobile communication system according to a fifth exemplary embodiment;
Fig. 12 is a sequence diagram showing a flow to storage of paging suppression target terminal information according to the fifth exemplary embodiment;
Fig. 13 is a sequence diagram showing a flow of paging suppression processing according to the fifth exemplary embodiment;
Fig. 14 is a block diagram showing a configuration of an incoming call control system according to the present invention;
Fig. 15 is a sequence diagram showing a flow of first determination processing regarding a paging suppression target terminal according to a sixth exemplary embodiment;
Fig. 16 is a sequence diagram showing a flow of second determination processing regarding the paging suppression target terminal according to the sixth exemplary embodiment;
Fig. 17 is a block diagram showing a configuration of an SGSN according to the sixth exemplary embodiment;
Fig. 18 is a block diagram showing a configuration of an SGSN according to a seventh exemplary embodiment;
Fig. 19 is a sequence diagram showing a flow of determination processing regarding a paging suppression target terminal according to the seventh exemplary embodiment;
Fig. 20 is a sequence diagram showing a flow of paging suppression processing according to the seventh exemplary embodiment;
Fig. 21 is a sequence diagram showing a flow to storage of paging suppression target terminal information according to an eighth exemplary embodiment;
Fig. 22 is a sequence diagram showing a flow of paging suppression processing according to the eighth exemplary embodiment;
Fig. 23 is a block diagram showing a configuration of an S-GW according to the eighth exemplary embodiment;
Fig. 24 is a sequence diagram showing a flow of determination processing regarding a paging suppression target terminal according to a ninth exemplary embodiment;
Fig. 25 is a sequence diagram showing a flow of paging suppression processing according to the ninth exemplary embodiment;
Fig. 26 is a sequence diagram showing a flow to storage of paging suppression target terminal information on an SGSN side according to a tenth exemplary embodiment;
Fig. 27 is a sequence diagram showing a flow to storage of paging suppression target terminal information on an MME side according to the tenth exemplary embodiment;
Fig. 28 is a sequence diagram showing a flow of paging suppression processing according to the tenth exemplary embodiment;
Fig. 29 is a sequence diagram showing a flow of processing of sharing paging suppression target terminal information according to an eleventh exemplary embodiment;
Fig. 30 is a flowchart showing a flow of processing to determine whether a terminal is a paging suppression target terminal according to the eleventh exemplary embodiment;
Fig. 31 is a block diagram showing a configuration of a radio communication system (UTRAN) according to a twelfth exemplary embodiment;
Fig. 32 is a sequence diagram showing a flow of processing to storage of paging suppression target terminal information by an MSC according to the twelfth exemplary embodiment;
Fig. 33 is a sequence diagram showing a flow of paging suppression processing according to the twelfth exemplary embodiment;
Fig. 34 is a sequence diagram showing a flow of paging suppression processing according to the twelfth exemplary embodiment;
Fig. 35 is a block diagram showing a configuration of a radio communication system (E-UTRAN) according to the twelfth exemplary embodiment; and

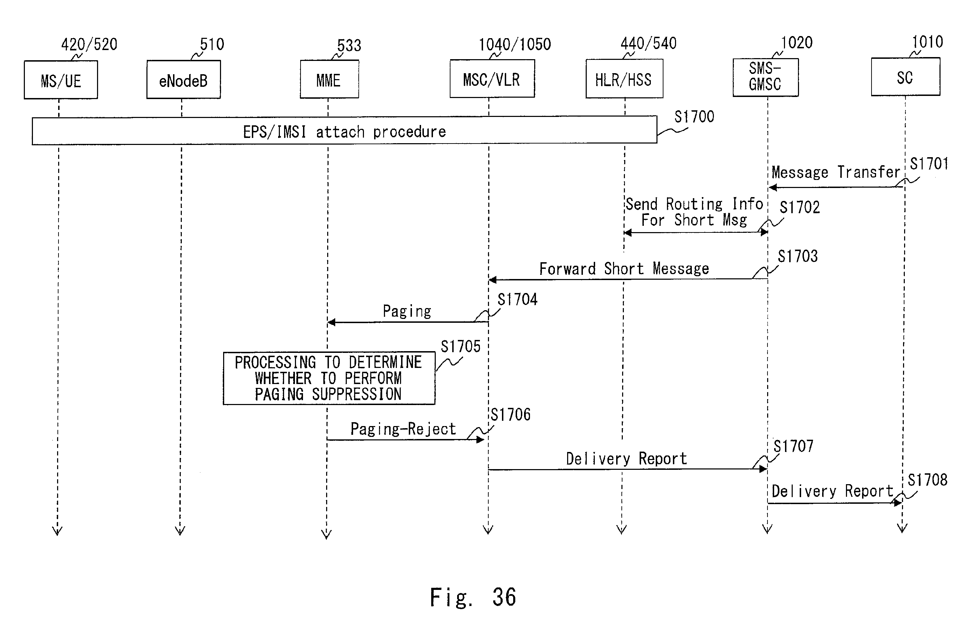

Fig. 36 is a sequence diagram showing a flow of paging suppression processing according to the twelfth exemplary embodiment.

### Description of Embodiments

### (First exemplary embodiment)

Exemplary embodiments of the present invention will be described hereinafter with reference to the drawings. The following description indicates preferred exemplary embodiments of the present invention, and the scope of the present invention is not limited to the following exemplary embodiments. In the following description, the components denoted by the same reference symbols indicate substantially the same components.

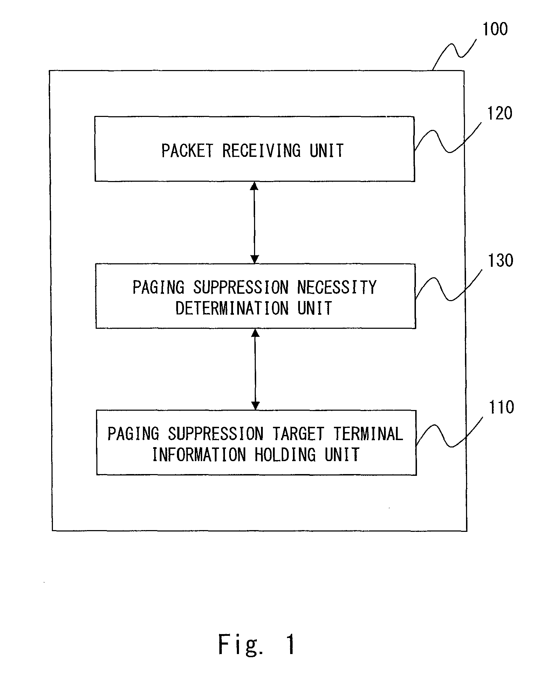

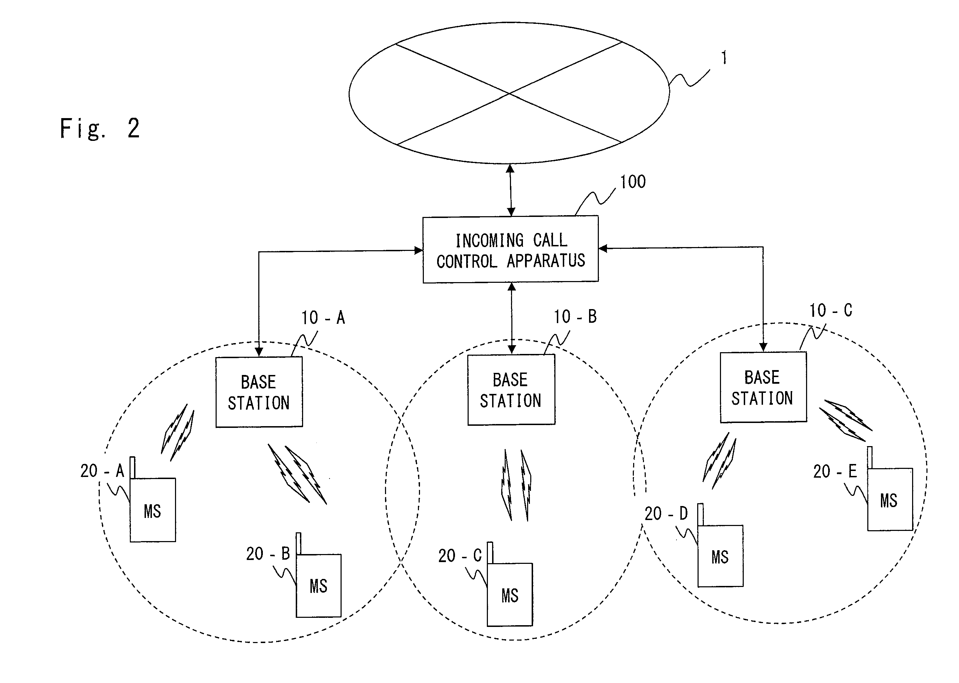

Fig. 1 is a block diagram showing a configuration of an incoming call control apparatus 100 according to a first exemplary embodiment. The incoming call control apparatus 100 includes a paging suppression target terminal information holding unit 110, a packet receiving unit 120, and a paging suppression necessity determination unit 130. The incoming call control apparatus 100 is arranged in a core network CN of a mobile communication system (radio communication system) 1000, as shown in Fig. 2.

As shown in Fig. 2, in the mobile communication system 1000, a plurality of base stations 10-A to 10-C perform radio communication with radio communication terminals 20A to 20E under the control of the base stations 10-A to 10-C. Further, each of the base stations 10-A to 10-C performs communication with the incoming call control apparatus 100 which is a higher order apparatus. The incoming call control apparatus 100 receives packet data and the like for a radio communication terminal under the control of the incoming call control apparatus 100 from the network 1, and transmits the packet data and the like to a base station to which the radio communication terminal belongs. Further, the incoming call control apparatus 100 receives the packet data and the like transmitted from the base station under the control of the incoming call control apparatus 100 from the base station, and transmits the packet data and the like to a network side. The incoming call control apparatus 100 performs determination regarding whether to suppress paging processing upon receiving a packet for a radio communication terminal under the control of the incoming call control apparatus 100 from the network side.

Referring back to Fig. 1, each function of the incoming call control apparatus 100 will be described. The paging suppression target terminal information holding unit 110 holds paging suppression target terminal information which is information regarding a radio communication terminal to be the target of paging suppression. The paging suppression target terminal information holding unit 110 stores information including an identifier for uniquely identifying the terminal (e.g., a telephone number and an individual identification number of a radio communication terminal which is the target of paging suppression) in an internal database as paging suppression target terminal information.

The packet receiving unit 120 receives packets from the network side. The packet includes an identifier for identifying the radio communication terminal related to packet arrival.

When the packet receiving unit 120 receives a packet, the paging suppression necessity determination unit 130 determines whether to suppress paging processing. Specifically, the paging suppression necessity determination unit 130 refers to the paging suppression target terminal information held in the paging suppression target terminal information holding unit 110, to determine whether the radio communication terminal related to the packet arrival is the target of paging suppression. More specifically, when an identifier of the radio communication terminal included in the packet is included in the paging suppression target terminal information, the paging suppression necessity determination unit 130 regards that the radio communication terminal related to the packet arrival is the radio communication terminal which is the target of paging suppression and does not perform paging processing. On the other hand, when the identifier is not included in the paging suppression target terminal information, the paging suppression necessity determination unit 130 normally starts paging processing based on the packet arrival.

As stated above, the incoming call control apparatus according to the first exemplary embodiment holds information regarding the radio communication terminal which is the target of paging suppression, and upon receiving a packet from the network side, refers to the information that is held to control incoming call processing based on the incoming call. According to such a configuration, it is possible to prevent the occurrence of unnecessary paging processing.

Each function of the paging suppression target terminal information holding unit 110, the packet receiving unit 120, and the paging suppression necessity determination unit 130 may be formed by hardware, or may be achieved by causing a central processing unit (CPU) to execute a program.

### (Second exemplary embodiment)

A mobile communication system according to a second exemplary embodiment includes means that specifies a radio communication terminal which is the target of paging suppression. Hereinafter, with reference to the drawings, the second exemplary embodiment of the present invention will be described. The parts described in the first exemplary embodiment will be partially omitted in order to clarify the present invention.

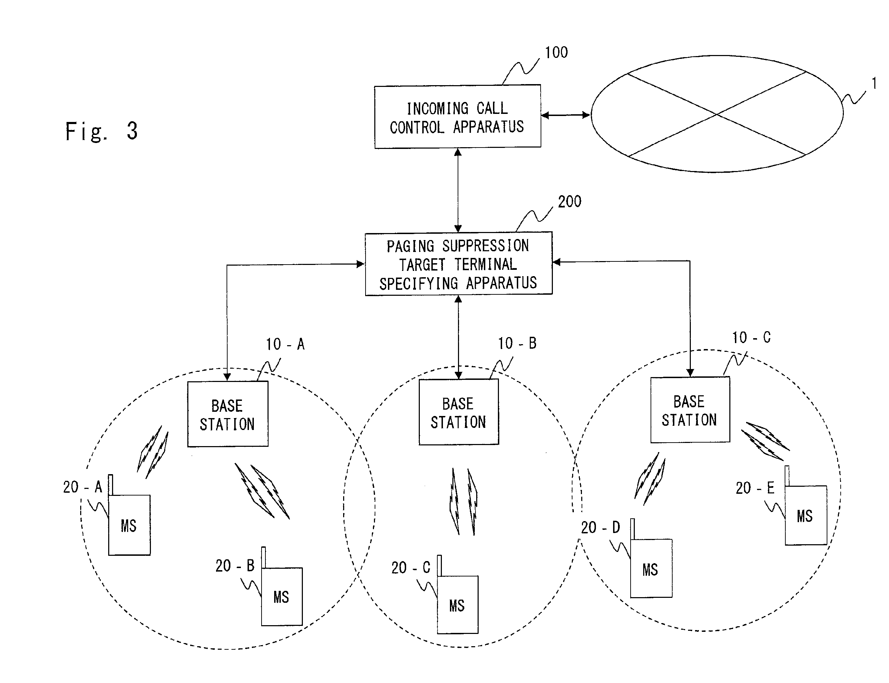

Fig. 3 is a block diagram showing a configuration of a mobile communication system 2000 according to the second exemplary embodiment. The mobile communication system 2000 is different from the mobile communication system 1000 shown in Fig. 2 in that the mobile communication system 2000 includes a paging suppression target terminal specifying apparatus 200 between the incoming call control apparatus 100 and the radio communication terminals 20. The paging suppression target terminal specifying apparatus 200 specifies a radio communication terminal which is the target of paging suppression from the radio communication terminals under the control of the paging suppression target terminal specifying apparatus 200 to notify the incoming call control apparatus 100 of the radio communication terminal which is the target of paging suppression.

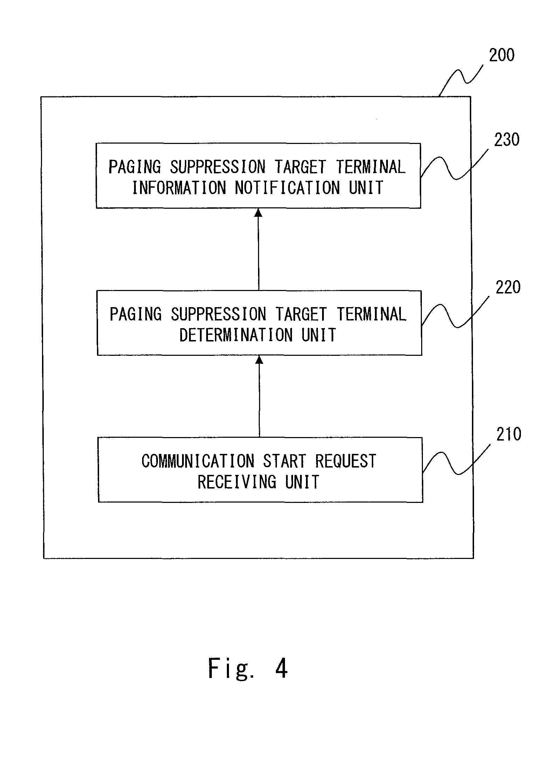

Fig. 4 is a block diagram showing a configuration of the paging suppression target terminal specifying apparatus 200. The paging suppression target terminal specifying apparatus 200 includes a communication start request receiving unit 210, a paging suppression target terminal determination unit 220, and a paging suppression target terminal information notification unit 230.

The communication start request receiving unit 210 receives a communication start request for requesting start of communication transmitted from the radio communication terminal 20.

The paging suppression target terminal determination unit 220 determines whether the radio communication terminal which has transmitted the communication start request is the terminal which is the target of paging suppression. The paging suppression target terminal determination unit 220 outputs the determination result to the paging suppression target terminal information notification unit 230 together with the communication start request.

When it is determined in the paging suppression target terminal determination unit 220 that the terminal is the target of paging suppression, the paging suppression target terminal information notification unit 230 transmits the paging suppression target terminal information indicating it and the communication start request to the incoming call control apparatus 100.

The incoming call control apparatus 100 receives the paging suppression target terminal information transmitted from the paging suppression target terminal information notification unit 230 of the paging suppression target terminal specifying apparatus 200 by receiving means, and stores the paging suppression target terminal information in the paging suppression target terminal information holding unit 110.

As described above, the mobile communication system according to the second exemplary embodiment includes the paging suppression target terminal specifying apparatus between the incoming call control apparatus and the radio communication terminals. When the paging suppression target terminal specifying apparatus receives the communication start request transmitted from the radio communication terminal, the paging suppression target terminal specifying apparatus determines whether the radio communication terminal which has transmitted the communication start request that is received is the terminal which is the target of paging suppression. When it is determined that the terminal is the target of paging suppression, the radio communication terminal related to the communication start request notifies the incoming call control apparatus of the paging suppression target terminal information indicating the terminal which is the target of paging suppression. By employing such a configuration, the incoming call control apparatus is able to receive and sequentially store paging suppression target terminal information indicating the terminal which is the target of paging suppression, and to determine whether to suppress paging when receiving a packet from the network side based on the stored information.

Note that each function of the communication start request receiving unit 210, the paging suppression target terminal determination unit 220, and the paging suppression target terminal information notification unit 230 may be formed by hardware, or may be achieved by causing a CPU to execute a program.

While the paging suppression target terminal determination unit 220 determines whether the radio communication terminal which has transmitted the communication start request is the target of paging suppression in the description above, it is not limited to this. The paging suppression target terminal determination unit 220 may perform the determination for a radio communication terminal related to processing such as location registration.

### (Third exemplary embodiment)

A paging suppression target terminal specifying apparatus according to a third exemplary embodiment performs determination regarding whether a radio communication terminal which has transmitted a communication start request is the terminal which is the target of paging suppression based on various determination criteria. In the following description, the third exemplary embodiment of the present invention will be described with reference to the drawings. The parts described in the first and second exemplary embodiments will be partially omitted for the sake of clarification of the invention.

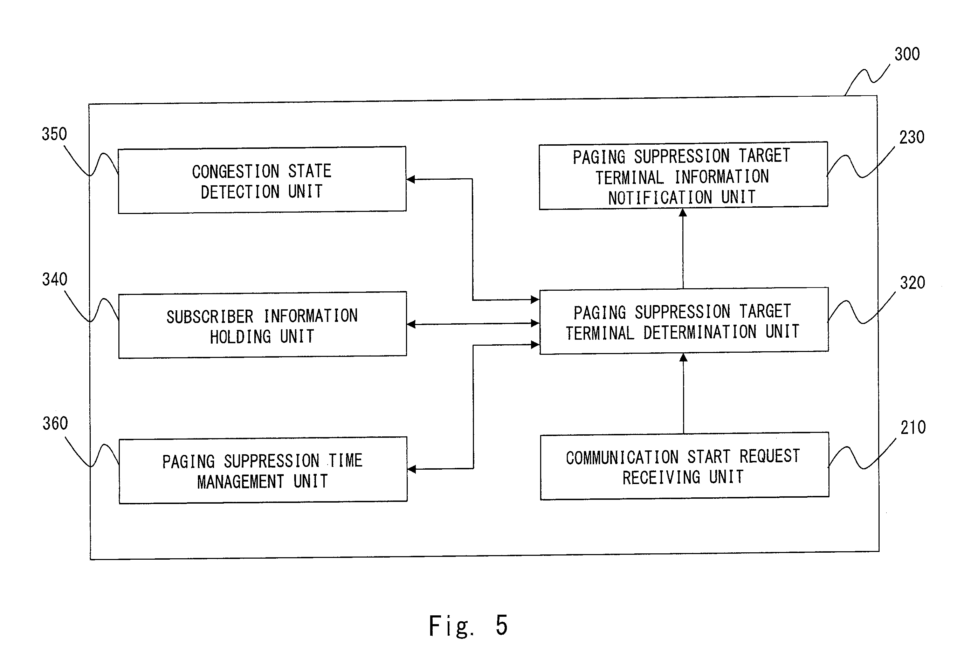

Fig. 5 is a block diagram showing a configuration of a paging suppression target terminal specifying apparatus 300 according to the third exemplary embodiment. The paging suppression target terminal specifying apparatus 300 includes a communication start request receiving unit 210, a paging suppression target terminal determination unit 320, a paging suppression target terminal information notification unit 230, a subscriber information holding unit 340, a congestion state detection unit 350, and a paging suppression target time management unit 360.

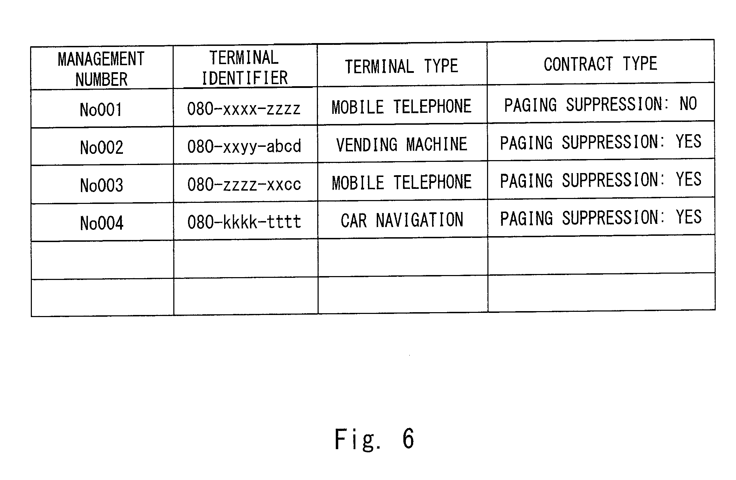

The subscriber information holding unit 340 holds subscriber information of radio communication terminals. Fig. 6 is a diagram showing one example of the subscriber information. The subscriber information includes various types of information regarding a radio communication terminal associated with one another for each management number. In Fig. 6, identification information for identifying the radio communication terminal, the terminal type of the radio communication terminal, and the contract type of the radio communication terminal are associated with one another. The terminal type is information indicating the type of the radio communication terminal, and includes information regarding whether the radio communication terminal is a mobile telephone, a radio communication terminal incorporated into a vending machine for data communication, or a radio communication terminal for data communication incorporated into a car navigation device. Further, the contract type indicates information including the content of the contract with a carrier for the radio communication terminal. Fig. 6 specifically indicates whether the terminal is the target of paging suppression.

The congestion state detection unit 350 detects that congestion occurs in a network. The congestion state detection unit 350 monitors the traffic of the network, and determines that congestion occurs when the traffic load exceeds a predetermined reference value. The congestion state detection unit 350 internally holds the result obtained by detecting the congestion state of the current network.

The paging suppression target time management unit 360 manages whether the current time is in the time period in which paging suppression is performed.

When the communication start request is received by the communication start request receiving unit 210, the paging suppression target terminal determination unit 320 determines whether the radio communication terminal related to the communication start request is the terminal which is the target of paging suppression. The paging suppression target terminal determination unit 320 determines whether the terminal is the target of paging suppression based on the subscriber information stored in the subscriber information holding unit 340, the congestion state detected by the congestion state detection unit 350, paging suppression target time managed by the paging suppression target time management unit 360 and the like.

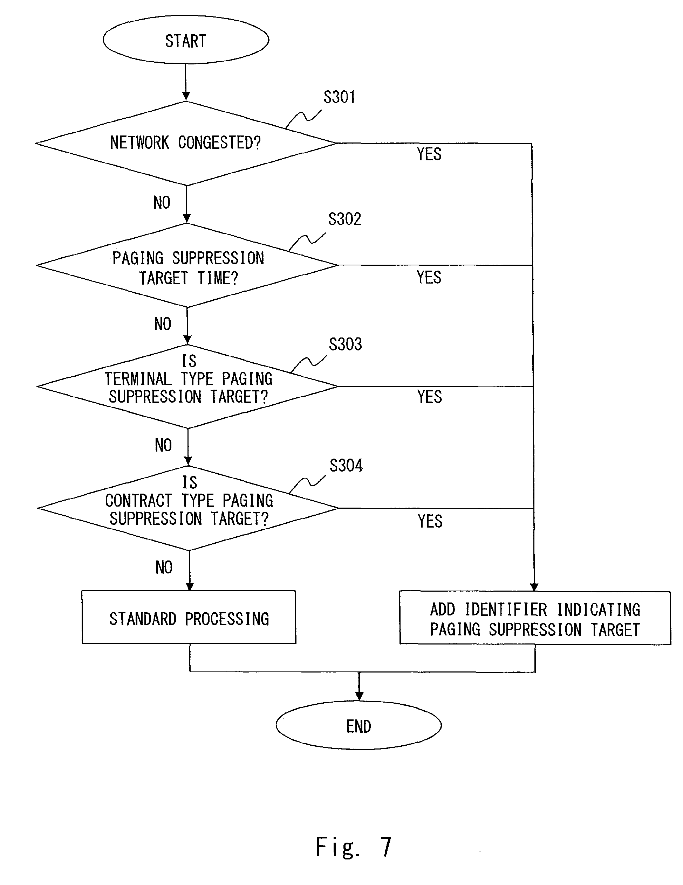

Fig. 7 is a flowchart showing a procedure of an operation performed by the paging suppression target terminal determination unit 320. Upon receiving the communication start request from the communication start request receiving unit 210, the paging suppression target terminal determination unit 320 determines whether the network is in a congestion state based on the detection result in the congestion state detection unit 350 (Step S301). When the network is in a congestion state, the process goes to Step S306: when the network is not in a congestion state, the process goes to Step S302.

When the network is not in a congestion state as a result of the determination in Step S301, the paging suppression target terminal determination unit 320 accesses the paging suppression target time management unit 360 to determine whether the current time is in the time period in which paging suppression is performed (Step S302). When the current time is in the time period in which paging suppression is performed, the process goes to Step S306: when the current time is not in the time period in which paging suppression is performed, the process goes to Step S303.

When the current time is not in the time period in which paging suppression is performed as a result of the determination in the Step S302, the paging suppression target terminal determination unit 320 reads out the subscriber information of the radio communication terminal related to the communication start request from the subscriber information holding unit 340, and determines whether the terminal type included in the subscriber information is a terminal type which is the target of paging suppression (Step S303). More specifically, the paging suppression target terminal determination unit 320 reads out the subscriber information of the terminal using the terminal identification information for identifying the radio communication terminal which has transmitted the communication start request, and refers to the terminal type included in the subscriber information to perform the determination. When the type of the terminal is the target of paging suppression as a result of the determination, the process goes to Step S306. Meanwhile, when the terminal type is not the target of paging suppression, the process goes to Step S304.

When the type of the terminal is not the target of paging suppression as a result of the determination in the Step S303, the paging suppression target terminal determination unit 320 further refers to the contract type of the subscriber information to determine whether the contract type is the target of paging suppression (Step S304). When the contract type is the target of paging suppression as a result of the determination, the process goes to Step S306. Meanwhile, when the contract type is not the target of paging suppression, the process goes to Step S305.

When the contract type is not the target of paging suppression as a result of the determination in the Step S304, the paging suppression target terminal determination unit 320 determines that the radio communication terminal related to the communication start request is not the target of paging suppression, and proceeds the normal communication start request processing (Step S305). More specifically, the paging suppression target terminal determination unit 320 directly passes the communication start request received from the communication start request receiving unit 210 to the paging suppression target terminal information notification unit 230, and the paging suppression target terminal information notification unit 230 transmits the communication start request to a higher order apparatus. In this way, the normal communication start processing is proceeded.

On the other hand, when the result of each determination processing in Step S301 to Step S304 is "Yes", the paging suppression target terminal determination unit 320 determines that the radio communication terminal related to the communication start request is the target of paging suppression, and transmits the determination result to the paging suppression target terminal information notification unit 230 together with the communication start request. The paging suppression target terminal information notification unit 230 creates paging suppression target terminal information from the determination result, and transmits the paging suppression target terminal information to a higher order apparatus together with the communication start request.

As described above, the paging suppression target terminal specifying apparatus according to the third exemplary embodiment further includes congestion detection means that detects whether congestion occurs, to determine whether the radio communication terminal related to the communication start request is set to the target of paging suppression based on the detection result.

Further, the paging suppression target terminal specifying apparatus according to the third exemplary embodiment further includes storage means that stores subscriber information of the radio communication terminal which is in the range under the control of the paging suppression target terminal specifying apparatus, and determines whether the radio communication terminal related to the communication start request is set to the target of paging suppression based on the subscriber information. More specifically, the paging suppression target terminal specifying apparatus determines whether the radio communication terminal is set to the target of paging suppression based on the terminal type and the contract type included in the subscriber information.

Further, the paging suppression target terminal specifying apparatus according to the third exemplary embodiment further includes management means that manages the time period in which paging suppression is performed, and determines whether to set the radio communication terminal related to the communication start request to the target of paging suppression based on the result whether the current time is in the time period in which paging suppression is performed.

In this way, the paging suppression target terminal specifying apparatus determines whether to perform paging suppression based on these criteria, and creates the paging suppression target terminal information as necessary to transmit the paging suppression target terminal information to the incoming call control apparatus which is a higher order apparatus. This results in that the incoming call control apparatus is able to appropriately determine whether to perform paging processing related to the request upon receiving a packet from a network side.

The aforementioned determination may be performed using other determination criteria than those stated above. For example, the load state of the apparatus may be used for the determination. Specifically, detection means that detects the load state of the apparatus may be additionally provided, and the paging suppression target terminal determination unit 320 may determine whether the radio communication terminal related to the communication start request received by the receiving means is the terminal which is the target of paging suppression based on the load state of the apparatus.

Further, while described above is the case in which the paging suppression target terminal determination unit 320 performs the determination based on the subscriber information after performing the determination regarding paging suppression target time and the congestion state of the network, it is not limited to this. For example, conditions for the target of paging suppression (e.g., the rate of the congestion state of the network, the paging suppression target time) may be set in detail for each subscriber in the contract information included in the subscriber information stored in the subscriber information holding unit 340. The paging suppression target terminal determination unit 320 may read the conditions for the target of paging suppression based on the contract information included in the subscriber information, and compare the conditions with the current congestion state, the device load state, the current time and the like to determine whether the radio communication terminal related to the received communication start request is the paging suppression target terminal. By employing such a configuration, it is possible to reflect the content of the contract between the subscriber and the carrier to perform more detailed incoming call control.

### (Fourth exemplary embodiment)

A mobile communication system according to a fourth exemplary embodiment is a mobile communication system which employs a UMTS Terrestrial Radio Access Network (UTRAN) system, and is a mobile communication system including the paging suppression function (incoming call control function) described in the first to third exemplary embodiments. Hereinafter, with reference to the drawings, the fourth exemplary embodiment of the present invention will be described. The parts described in the first to third exemplary embodiments will be partially omitted for the sake of clarification of the invention.

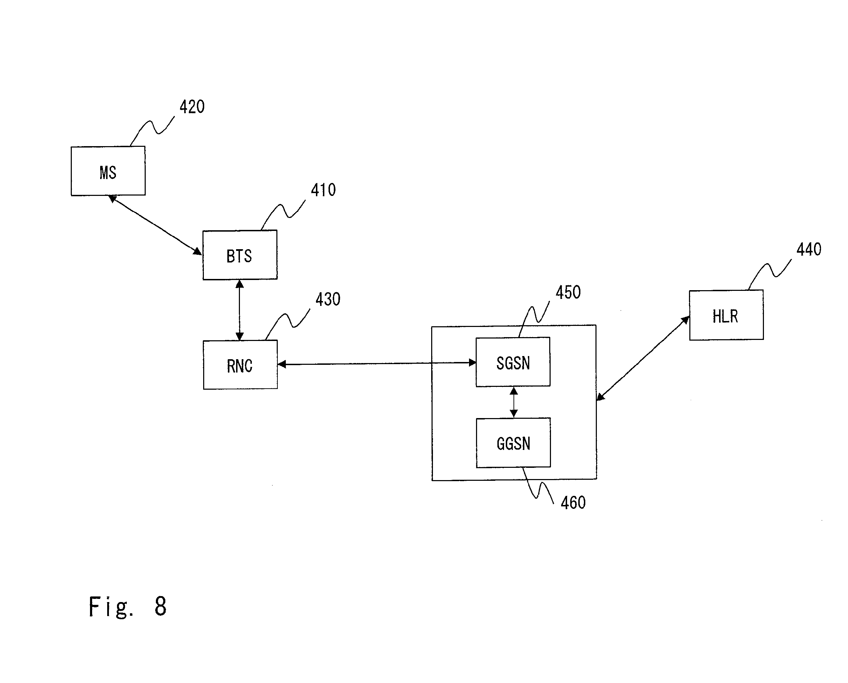

Fig. 8 is a block diagram showing a configuration of a mobile communication system 4000 (UTRAN) according to the fourth exemplary embodiment. The mobile communication system 4000 includes a base transceiver station (BTS) 410, a mobile station (MS) 420, a radio network controller (RNC) 430, a home location register (HLR) 440, a serving GPRS support node (SGSN) 450, and a gateway GPRS support node (GGSN) 460.

The MS 420 is a mobile station which is a radio communication terminal, and performs radio communication with the BTS 410. The MS 420 transmits Activate PDP Context Request which is a communication start request when requesting start of communication.

The BTS 410 is a base station, and transmits data wirelessly transmitted from the MS under the control of the BTS 410 to the RNC 430 which is a higher order apparatus. Further, the BTS 410 wirelessly transmits the data received from the RNC 430 to the MS under the control of the BTS 410.

The RNC 430 is a radio network controller. The RNC 430 performs various controls of the BTS 410 under the control of the RNC 430 and performs communication with the SGSN 450 which is a higher order apparatus.

The HLR 440 is a subscriber information management apparatus, and stores subscriber information including the terminal type and the contract information of each subscriber.

The SGSN 450 is a packet switchboard, and includes a function as the paging suppression target terminal specifying apparatus described above. In summary, the SGSN 450 stores and manages the information (e.g., the terminal type, the contract information, the congestion state of the network, the device load state, the time period of paging suppression) for determining whether to suppress paging in the internal storage unit.

The determination unit provided in the SGSN 450 receives Activate PDP Context Request transmitted from the MS 420 at the time of attaching of the MS 420, and determines whether the MS 420 is to be the target of paging suppression based on the conditions (e.g., the terminal type, the contract information, the congestion state of the network, the device load state, the time period). The determination may be made according to the process flow shown in Fig. 7. When it is determined in the determination unit that the MS 420 is the target of paging suppression, a transmitting unit provided in the SGSN 450 adds the identifier indicating the MS in which paging should be suppressed to Create PDP Context Request to transmit Create PDP Context Request to the GGSN 460.

The GGSN 460 is a higher order packet switchboard, and includes a function as the incoming call control apparatus stated above. The GGSN 460 receives, from the SGSN 450, the identifier with which the MS to be the target of paging suppression can be specified, and holds the identifier by storing it in the internal storage unit as the paging suppression target terminal information. The GGSN 460 includes means that suppresses transmission of Send Routing Info for GPRS to the HLR or PDU Notification Request for the SGSN when there is an incoming call for the MS afterward. More specifically, the determination unit provided in the GGSN 460 refers to the paging suppression target terminal information stored in the storage unit upon receiving a packet by the receiving means from the network side, to determine whether the packet is for the MS which is the target of paging suppression. Then the incoming call controller provided in the GGSN 460 determines that paging suppression is performed when it is determined in the determination unit that the incoming call is for the MS which is the target of paging suppression. Then the incoming call controller suppresses paging by not performing transmission of Send Routing Info for GPRS to the HLR or PDU Notification Request for the SGSN. On the other hand, when it is determined in the determination unit that the incoming call is for an MS which is not the target of paging suppression, the incoming call controller proceeds the paging processing according to the standard sequence.

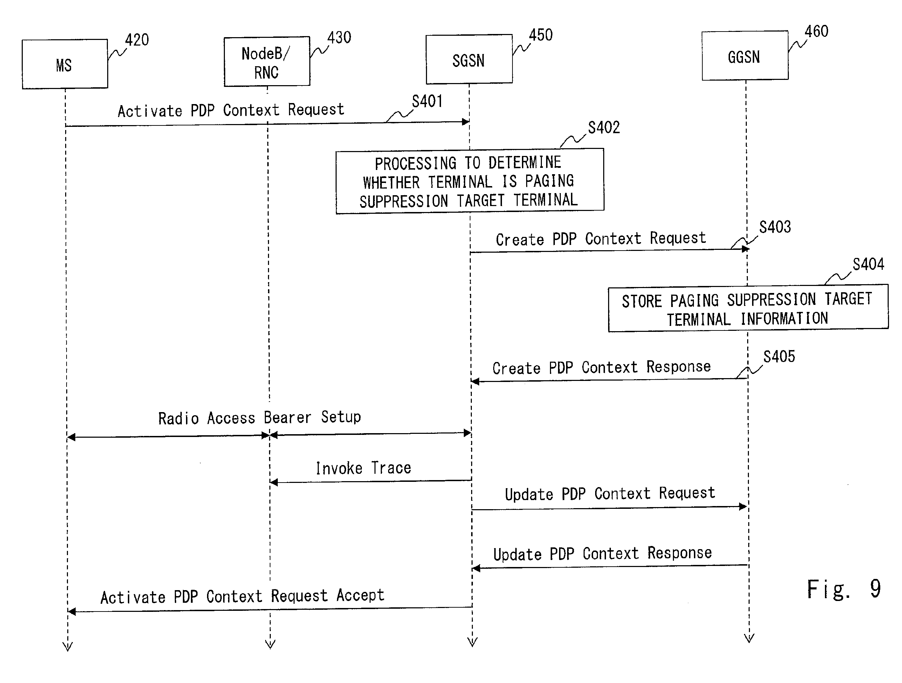

Next, an operation of the mobile communication system 4000 will be described. Fig. 9 is a sequence diagram showing a flow of an operation of the mobile communication system 4000.

The MS 420 transmits Activate PDP context Request to the SGSN 450 through the BTS 410 and the RNC 430 to request start of communication (Step S401). Upon receiving Activate PDP context Request, the SGSN 450 determines whether the MS 420 which has issued the request is the terminal which is the target of paging suppression (Step S402).

The SGSN 450 gives an identifier indicating the MS in which paging should be suppressed as necessary based on the determination result in the Step S402 to transmit Create PDP Context Request to the GGSN 460 (Step S403).

When the identifier is added to the received Create PDP Context Request, the GGSN 460 stores and holds the identifier as paging suppression target terminal information (Step S404), and transmits Create PDP Context Response back to the SGSN 450 (Step S405). After that, the connection processing is proceeded according to a predetermined protocol in accordance with a standard sequence. Such a processing is performed between a plurality of MSs and the GGSN, whereby the information regarding the MS which is the target of paging suppression is stored in the GGSN 460.

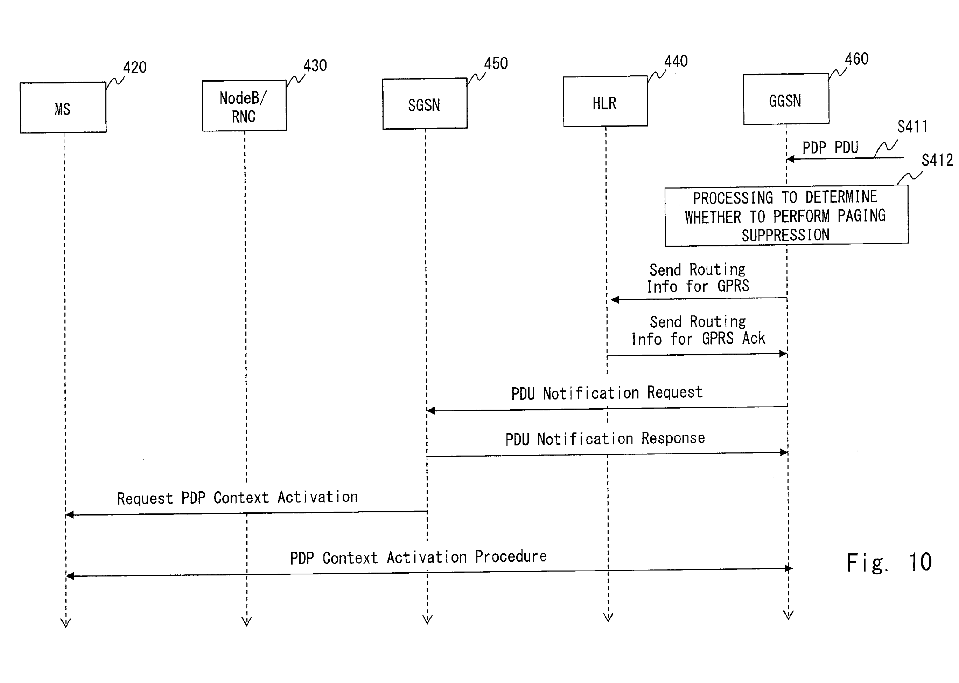

Next, description will be made of incoming call control performed by the GGSN 460. As shown in a sequence diagram in Fig. 10, the GGSN 460 receives PDP PDU which is a packet from the external network (Step S411). The GGSN 460 performs processing to determine whether the packet is for the terminal which is the target of paging suppression based on the paging suppression target terminal information that the GGSN 460 holds (Step S412). When it is determined that the terminal corresponds to the paging suppression target terminal, the GGSN 460 discards PDP PDU and does not perform the following processing. On the other hand, when it is determined that the terminal does not correspond to the paging suppression target terminal, the GGSN 460 performs the following processing in accordance with the standard sequence.

As described above, in the mobile communication system according to the fourth exemplary embodiment, when the packet switchboard SGSN receives Activate PDP Context Request which is a communication start request, it is determined whether the mobile station (radio communication terminal) which has issued the request is the paging suppression target terminal based on predetermined criteria. The GGSN holds paging suppression target terminal information which is the information regarding the mobile station determined to be the paging suppression target terminal by the SGSN, and determines whether to suppress paging based on the paging suppression target terminal information that is held when PDP PDU which is a packet is received from the network side. According to the configuration, it is possible to incorporate the incoming call control function in the mobile communication system of the existing UTRAN without dramatically changing the mobile communication system.

### (Fifth exemplary embodiment)

A mobile communication system according to a fifth exemplary embodiment is a mobile communication system employing an evolved UTRAN (E-UTRAN) system, and is a mobile communication system including the paging suppression function described in the first to third exemplary embodiments. Hereinafter, with reference to the drawings, the fifth exemplary embodiment of the present invention will be described. Note that the parts described in the first to third exemplary embodiments will be partially omitted for the sake of clarification of the invention.

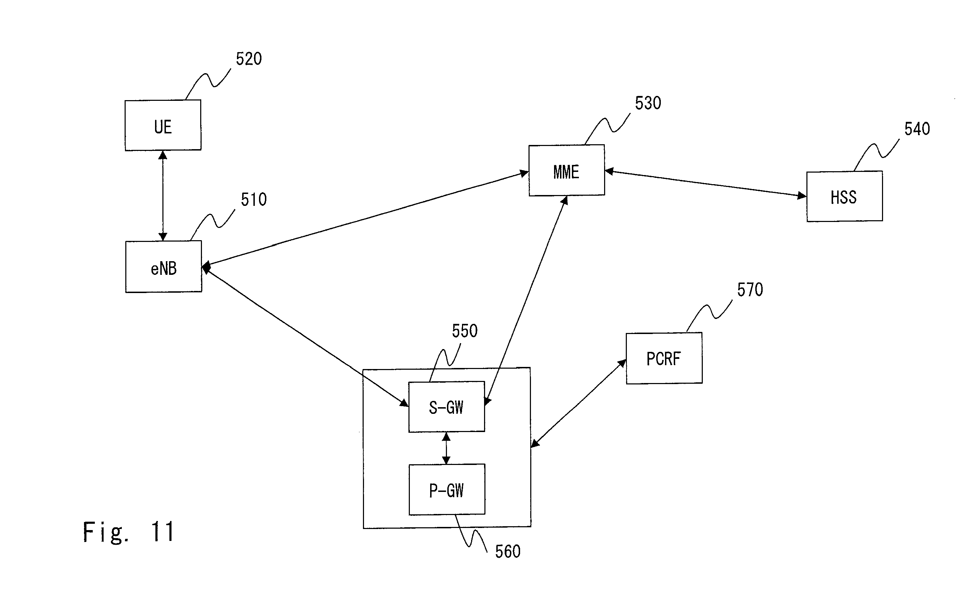

Fig. 11 is a block diagram showing a configuration of a mobile communication system 5000 (E-UTRAN) according to the fifth exemplary embodiment. The mobile communication system 5000 includes an evolved Node B (eNB) 510, a user equipment (UE) 520, a mobility management entity (MME) 530, a home subscriber server (HSS) 540, a serving gateway (S-GW) 550, a PDN Gateway (P-GW) 560, and a policy and charging rules function (PCRF) 570.

The UE 520 is a mobile station which is a radio communication terminal, and performs radio communication with the eNB 510.

The eNB 510 is a base station, and transmits data wirelessly transmitted from the UE under the control of the eNB 510 to the S-GW 550. Further, the eNB 510 wirelessly transmits the data received from the S-GW 550 to the UE under the control of the eNB 510.

The MME 530 is a mobility management node, and performs authentication processing and mobility management of the UE, and setup processing of other data transfer paths. Further, the MME 530 includes a function as the paging suppression target terminal specifying apparatus described above, and stores and manages the information to determine whether to suppress paging (the terminal type, the contract information, the congestion state of the network, the device load state, the time period in which paging suppression is performed or the like) in an internal storage unit.

The determination unit provided in the MME 530 receives attach Request transmitted from the UE 520 at the time of attaching of the UE 520, and then determines whether the UE 520 is the UE which is the target of paging suppression based on the conditions such as the terminal type, the contract information, the congestion state of the network, the device load state, the time period and the like. The determination may be performed according to the process flow shown in Fig, 7. When it is determined that the determination unit is the terminal which is the target of paging suppression, a transmitting unit provided in the MME 530 adds the identifier indicating the MS in which paging should be suppressed to Create Session Request to transmit Create Session Request to the P-GW 560 through the S-GW 550.

The HSS 540 is a subscriber information management apparatus, and stores subscriber information such as the terminal type and contract information of each subscriber. The HSS 540 also stores location information indicating the location of each UE related to the location registration processing performed by the MME 530.

The S-GW 550 is a gateway device. The S-GW 550 is arranged between the eNB 510 and the P-GW to perform data transmission.

The P-GW 560 is a higher order gateway device, and has a function as the incoming call control apparatus described above. The P-GW 560 receives, from the MME 530, the identifier with which the UE which is the target of paging suppression can be specified, and stores and holds the identifier in the internal storage unit as the paging suppression target terminal information. The P-GW 560 includes means for suppressing transmission of Downlink Data to the S-GW 550 when there is an incoming call for the UE afterwards. More specifically, upon receiving a packet from the network side by the receiving means, the determination unit provided in the P-GW 560 refers to the paging suppression target terminal information stored in the storage unit to determine whether the destination of the incoming call is the UE which is the target of paging suppression. When it is determined in the determination unit that the destination of the incoming call is the UE which is the target of paging suppression, the incoming call controller provided in the P-GW 560 suppresses paging by not performing transmission of data to the S-GW 550. On the other hand, when it is determined in the determination unit that the destination of the incoming call is the UE which is not the target of paging suppression, the incoming call controller proceeds paging processing according to the standard sequence.

The PCRF 570 is a subscriber policy/charging rules management apparatus, and determines charging control rules and policy control such as QoS.

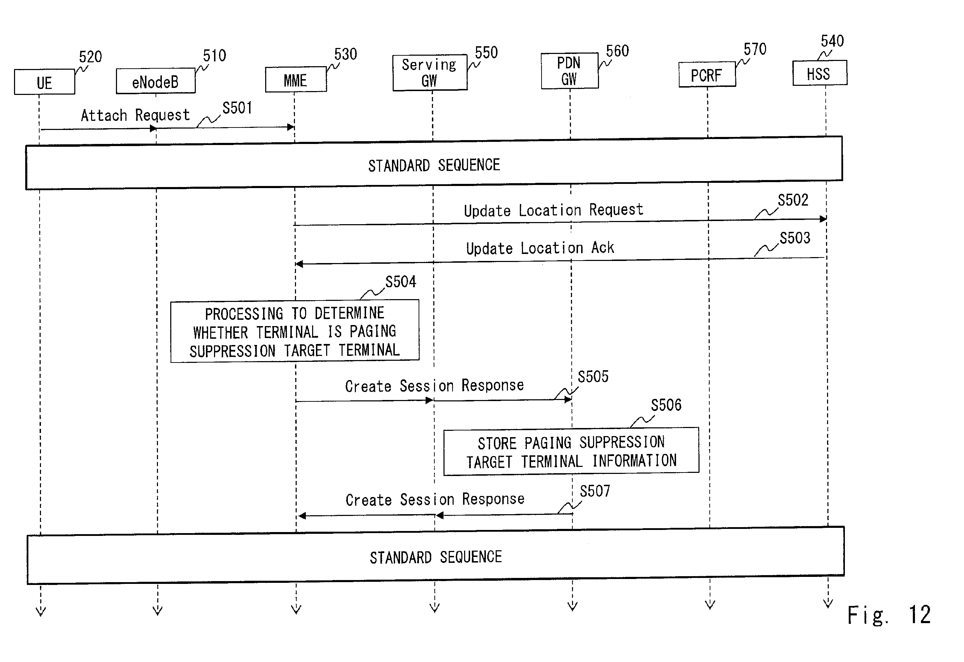

Next, an operation of the mobile communication system 5000 will be described. Fig. 12 is a sequence diagram showing a flow of an operation of the mobile communication system 5000.

The UE 520 transmits Attach Request to the MME 530 via the eNB 510 at the time of attaching (Step S501). After that, authentication processing and concealing processing are performed among the UE, the eNB, the MME, and the HSS according to the standard sequence. Then, the MME 530 transmits Update Location Request which is a location registration request to the HSS 540 (Step S502). When the location registration update of the UE 520 is completed based on the location registration request, the HSS 540 sends Update Location Ack back to the MME 530 (Step S503).

Upon receiving the Update Location Ack, the MME 530 determines whether the UE 520 that has issued the Attach Request is the terminal which is the target of paging suppression (Step S504).

The MME 530 gives the identifier indicating the UE in which paging should be suppressed as necessary based on the determination result in the Step S504 to transmit Create Session Request to the P-GW 560 through the S-GW 550 (Step S505).

When the identifier is given to the received Create Session Request, the P-GW 560 stores and holds the identifier as the paging suppression target terminal information (Step S506), to send Create Session Response back to the MME 530 through the S-GW 550 (Step S507). After that, connection processing is proceeded according to a predetermined protocol in accordance with the standard sequence. Such processing is performed between a plurality of UEs and the P-GW, whereby information regarding the UE which is the target of paging suppression is accumulated in the P-GW 560.

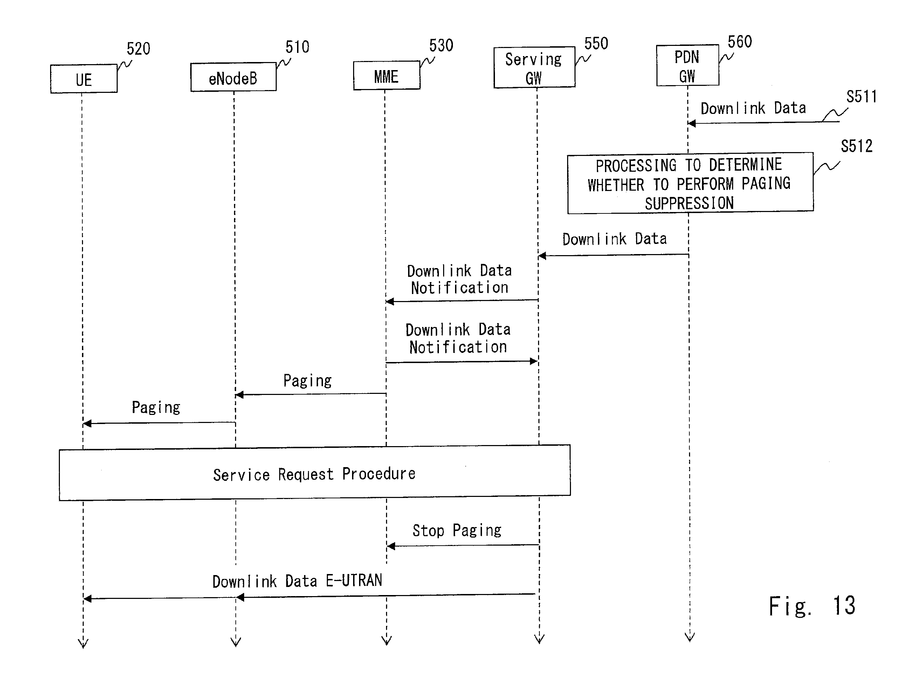

Next, the incoming call control performed by the P-GW 560 will be described. As shown in the sequence diagram shown in Fig. 13, the P-GW 560 receives Downlink data which is a packet in a downward direction from the external network (Step S511). The P-GW 560 performs processing to determine whether Downlink Data is for the terminal which is the target of paging suppression based on the paging suppression target terminal information that the P-GW 560 holds (Step S412). When it is determined that the terminal corresponds to the paging suppression target terminal, the P-GW 560 discards the downlink data and does not execute the following processing. On the other hand, when it is determined that the terminal does not correspond to the paging suppression target terminal, the P-GW 560 performs the following processing according to the standard sequence.

As described above, in the mobile communication system according to the fifth exemplary embodiment, when the MME which is the mobility management node receives Attach Request which is the communication start request, it is determined whether the mobile station (radio communication terminal) that has issued the request is the paging suppression target terminal based on predetermined criteria. The P-GW which is a gateway device holds paging suppression target terminal information which is the information regarding the mobile station determined to be the paging suppression target terminal by the MME, and determines whether to suppress paging based on the paging suppression target terminal information that is held when receiving Downlink Data which is the packet in a downward direction from the network side. According to the configuration, it is possible to incorporate the paging suppression function in the mobile communication system of the existing UTRAN without dramatically changing the mobile communication system.

While described above is the case in which the determination regarding whether the terminal is the paging suppression target terminal is performed when the location registration processing is completed (when receiving Update Location Ack from the HSS 540), it is not limited to this. When the standard authentication processing is not necessary, the MME 530 may determine whether the terminal is the paging suppression target terminal upon receiving Attach Request from the eNB 510.

### (Sixth exemplary embodiment)

A mobile communication system according to a sixth exemplary embodiment is a mobile communication system employing the UTRAN system shown in Fig. 8. Compared with the fourth exemplary embodiment, the timing for performing the determination whether the SGSN is the paging suppression target terminal is changed in the sixth exemplary embodiment. Specifically, the SGSN 450 according to the fourth exemplary embodiment performs determination regarding whether the the MS 420 is the paging suppression target terminal based on the terminal information such as Low priority information included in Activate PDP Context Request and the subscriber information that has already been received from the HLR 440 and has been managed upon receiving the Activate PDP Context Request from the MS 420. Meanwhile, the SGSN 451 according to the sixth exemplary embodiment performs the determination at the location registration processing which is at an earlier stage. Hereinafter, the sixth exemplary embodiment of the present invention will be described with reference to the drawings. The parts described in each of the exemplary embodiments will be partially omitted.

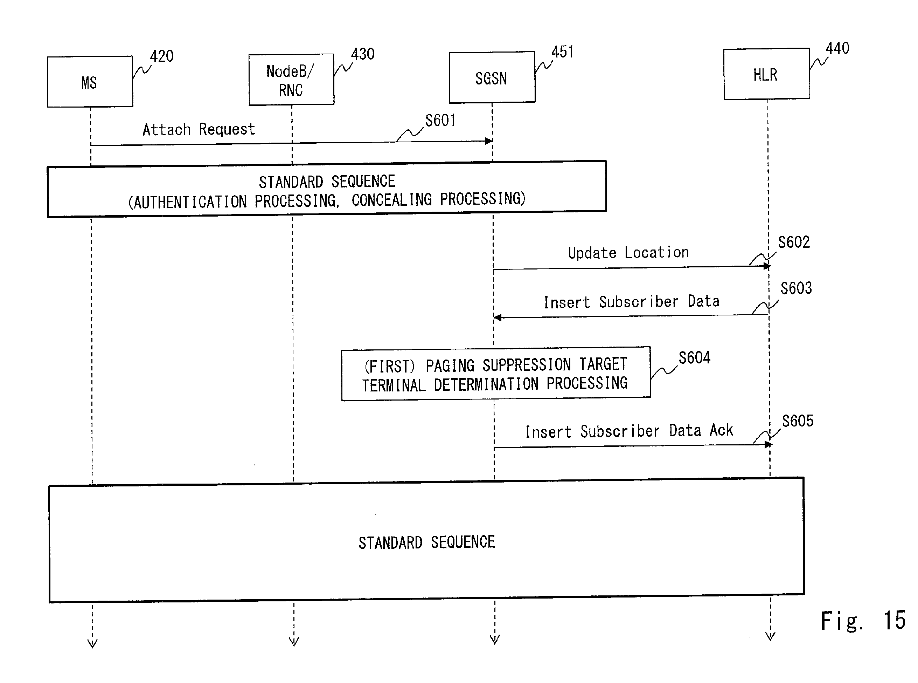

Fig. 15 is a sequence diagram showing a flow of an operation of a mobile communication system 4000 according to the sixth exemplary embodiment.

The SGSN 451 receives Attach Request which is a location registration request transmitted from the MS 420 at the time of attaching (Step S601). Next, authentication processing and concealing processing are performed according to the standard sequence between the SGSN 451 that has received the Attach Request and the MS 420.

When the authentication processing and the like are successively completed, the SGSN 451 transmits Update Location which is the location registration request to the HLR 440 (Step S602).

The HLR 440 performs update processing of location registration based on Update Location, and transmits Insert Subscriber Data which is subscriber data registration to the SGSN 451 (Step S603).

The SGSN 451 that has received Insert Subscriber Data transmitted from the HLR 440 performs first determination processing to determine whether the MS 420 that performs the location registration request is the terminal which is the target of paging suppression based on the Insert Subscriber Data (Step S604). When it is determined in the determination processing that the MS 420 is the paging suppression target terminal, the SGSN 451 raises and manages a flag indicating that the MS 420 is the paging suppression target terminal. Note that it is possible to determine in the first determination processing whether the terminal is the paging suppression target terminal according to the flow shown in Fig. 7, for example.

The SGSN 451 transmits Insert Subscriber Data Ack indicating that the SGSN 451 successfully received the subscriber data registration to the HLR 440 (Step S605). The following processing is proceeded according to the standard location registration sequence, whereby the location registration is completed.

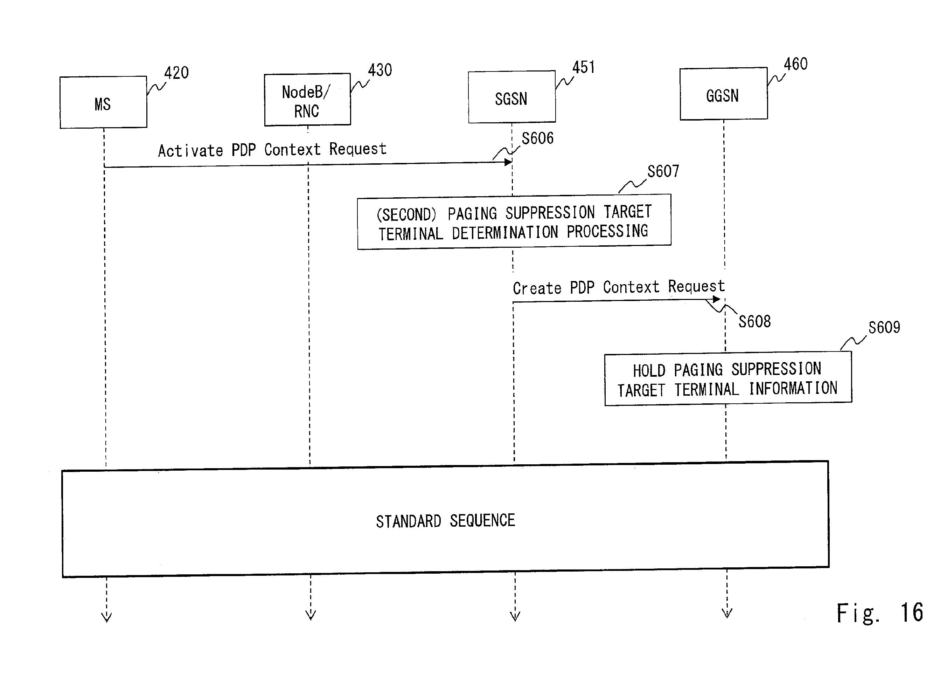

The flow of the operation when the connection request is issued from the MS 420 after the processing to determine whether the terminal is the paging suppression target terminal and the flag management are performed in the SGSN 451 at the step of location registration processing will be described with reference to a sequence diagram shown in Fig. 16.

As shown in Fig. 16, the MS 420 which requests connection transmits Activate PDP Context Request which is a connection request (communication start request) to the SGSN 451 (Step S606). The SGSN 451 that has received Activate PDP Context Request refers to the flag which is the determination result of the first determination processing in the Step S604 shown in Fig. 15 to perform second determination processing to determine whether the MS 420 that has transmitted the Activate PDP Context Request is the paging suppression target terminal (Step S607). In short, the SGSN 451 checks whether the MS 420 which has transmitted the received Activate PDP Context Request is the paging suppression target terminal by checking whether the flag is ON, thereby determining whether the MS 420 is the paging suppression target terminal.

When it is determined that the terminal is the paging suppression target terminal as a result of the second determination processing in the Step S607, the identifier indicating the paging suppression target terminal is given (included) to Create PDP Context Request to transmit Create PDP Context Request to the GGSN 460 which is a higher order apparatus (Step S608). Meanwhile, when it is determined that the terminal is not the paging suppression target terminal as a result of the determination processing in the Step S607, normal Create PDP Context Request is transmitted to the GGSN 460 which is a higher order apparatus without giving (including) the identifier indicating the paging suppression target terminal.

When the identifier indicating the paging suppression target terminal is given, the GGSN 460 that has received the Create PDP Context Request holds the identifier for identifying the MS 420 related to the Create PDP Context Request as the paging suppression target terminal information (Step S609). After that, connection processing is proceeded according to the standard sequence.

From processing from the aforementioned Step S601 to Step S609, the processing after the GGSN 460 receives PDP PDU from the external network after the GGSN 460 stores the paging suppression target terminal information is the same to that shown in Fig. 10. Therefore, description thereof will be omitted.

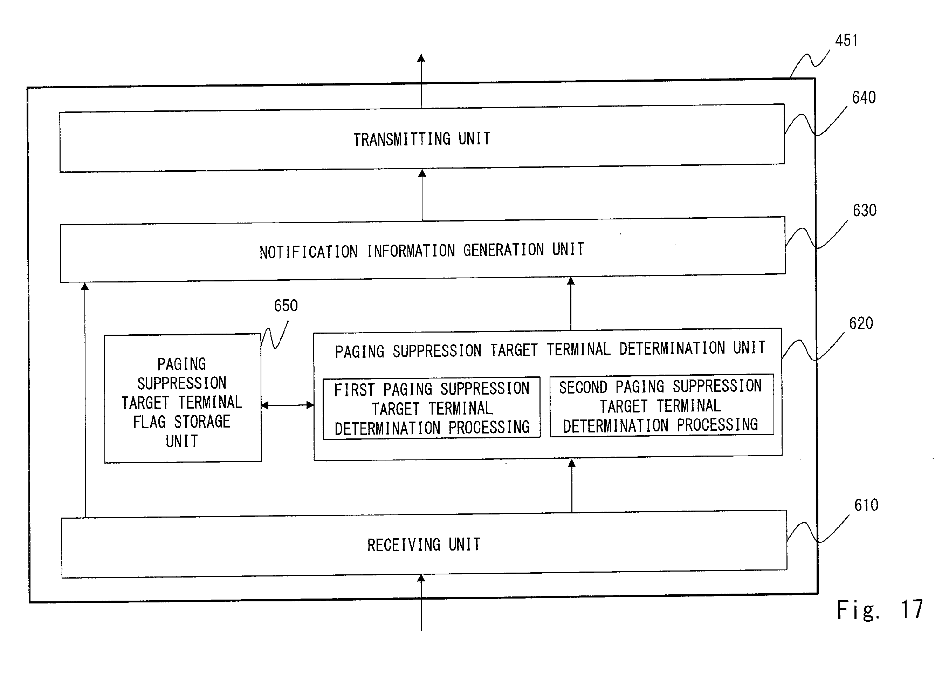

Fig. 17 is a block diagram showing a configuration of the SGSN 451. The SGSN 451 includes a receiving unit 610, a paging suppression target terminal determination unit 620, a notification information generation unit 630, a transmitting unit 640, and a paging suppression target terminal flag storage unit 650. The paging suppression target terminal determination unit 620 performs two determination processings including a first determination processing and a second determination processing.

The receiving unit 610 corresponds to the communication start request receiving unit 210 shown in Fig. 5. More specifically, the receiving unit 610 receives Attach Request and Activate PDP Context Request from the MS 420. Further, the receiving unit 610 receives Insert Subscriber Data from the HLR 440. The receiving unit 610 transmits the received Attach Request to the notification information generation unit 630, and transmits Activate PDP Context Request and Insert Subscriber Data to the paging suppression target terminal determination unit 620.

The paging suppression target terminal determination unit 620 determines whether the MS 420 is the terminal which is the target of paging suppression. More specifically, the paging suppression target terminal determination unit 620 performs the first determination processing to determine whether the MS 420 related to the Insert Subscriber Data is the terminal which is the target of paging suppression based on Insert Subscriber Data received by the receiving unit 610.

Insert Subscriber Data includes international mobile subscriber identity (IMSI) information which is an identifier for identifying the MS 420 and subscriber information. Therefore, the paging suppression target terminal determination unit 620 determines whether the MS 420 specified by the IMSI information included in the Insert Subscriber Data is the terminal which is the target of paging suppression using the subscriber information. Note that the paging suppression target terminal determination unit 620 may use the information including the congestion state of the network, the information regarding whether the current time is the paging suppression target time, or the information regarding whether the MS 420 is the terminal type which is the paging suppression target as shown in Fig. 7 as the determination criteria.

When it is determined that the MS 420 is the paging suppression target terminal as a result of the first determination processing, the paging suppression target terminal determination unit 620 stores, in the paging suppression target terminal flag storage unit 650, the flag indicating that the MS 420 is the paging suppression target terminal. The storage method may include a configuration of storing the list of the paging suppression target terminals in the paging suppression target terminal flag storage unit 650. The paging suppression target terminal determination unit 620 may add the paging suppression target terminal determined to be the paging suppression target terminal in the first determination processing to the paging suppression target terminal list, to store the list in the paging suppression target terminal flag storage unit 650.

Further, the paging suppression target terminal determination unit 620 performs the second determination processing to determine whether the MS 420 related to the Activate PDP Context Request is the terminal which is the target of paging suppression based on Activate PDP Context Request received by the receiving unit 610.

More specifically, the paging suppression target terminal determination unit 620 checks whether the MS 420 which has transmitted the Activate PDP Context Request is stored in the paging suppression target terminal flag storage unit 650 as the paging suppression target terminal. When the flag indicating the paging suppression target terminal is ON as a result of the check, the paging suppression target terminal determination unit 620 determines that the MS 420 is the paging suppression target terminal. On the other hand, when the flag is not ON, it is determined that the MS 420 is not the paging suppression target terminal.

The notification information generation unit 630 and the transmitting unit 640 each correspond to the paging suppression target terminal information notification unit 230 shown in Fig. 5. The notification information generation unit 630 generates Update Location, Insert Subscriber Data Ack, and Create PDP Context Request based on Attach Request, Insert Subscriber Data, and Activate PDP Context Request transmitted from the receiving unit 610 or the paging suppression target terminal determination unit 620.

When it is determined in the first determination processing that the terminal is the paging suppression target terminal based on Activate PDP Context Request, the notification information generation unit 630 adds the identifier indicating the paging suppression target terminal to generate Create PDP Context Request.

The transmitting unit 640 transmits Update Location and Insert Subscriber Data Ack generated by the notification information generation unit 630 to the HLR 440. Further, the transmitting unit 640 transmits Create PDP Context Request which is a PDP context creation request generated by the notification information generation unit 630 to the GGSN 460.

As described above, when the MS 420 that has transmitted Activate PDP Context Request is determined as the paging suppression target terminal, the identifier indicating the paging suppression target terminal is given to Create PDP Context Request that is generated based on the Activate PDP Context Request and Create PDP Context Request is transmitted. Accordingly, when the identifier is given to the received Create PDP Context Request, the GGSN 460 is able to store the identifier for identifying the MS 420 related to the Create PDP Context Request as the paging suppression target terminal information. For example, since a mobile subscriber integrated services digital network number (MSISDN) which is the identifier for identifying the MS 420 is included in Create PDP Context Request, the MSISDN may be stored as the paging suppression target terminal information.

As described above, the subscriber packet switchboard (SGSN) according to the sixth exemplary embodiment performs the first determination processing that determines whether the mobile station (MS) that requests the location registration is the paging suppression target terminal in the location registration processing, to store whether the MS is the paging suppression target terminal. Then, upon receiving the connection request from the MS, the SGSN checks whether the MS is stored as the paging suppression target terminal, to perform the second determination processing to determine whether the MS is the paging suppression target terminal. When the MS is stored as the paging suppression target terminal, the connection request from the MS is notified to the higher order apparatus. At the same time, it is also notified that the MS is the paging suppression target terminal.

By employing such a configuration, only the processing for checking whether the terminal is stored as the paging suppression target terminal is sufficient as the second determination processing performed based on the connection request. Accordingly, it is possible to transmit Create PDP Context Request which is the connection request to the higher order apparatus in a relatively short time. Accordingly, it is possible to perform paging suppression while reducing time required from the connection request to the connection completion.

While described above is the case in which the SGSN 451 determines whether the terminal is the paging suppression target terminal upon receiving Insert Subscriber Data from the HLR 440, it is not limited to this. For example, the SGSN 451 may perform the determination stated above upon receiving Attach Request from the MS 420 at the Step S601 in Fig. 15. More specifically, the paging suppression target terminal determination unit 620 may perform the first determination processing to determine whether the MS 420 which has transmitted the Attach Request is the paging suppression target terminal based on Attach Request received by the receiving unit 610. However, since the SGSN 451 has not received the subscriber information from the HLR 440 at this stage, the SGSN 451 refers to various types of information included in Attach Request and the congestion state of the network to determine whether the terminal is the paging suppression target terminal. As stated above, it may be possible to employ a configuration in which determination processing is performed to determine whether the terminal is the paging suppression target terminal at an earlier stage in the location registration processing.

### (Seventh exemplary embodiment)

Compared to the mobile communication system according to the sixth exemplary embodiment, a mobile communication system according to a seventh exemplary embodiment also performs paging suppression processing in addition to the determination processing by the SGSN to determine whether a terminal is the paging suppression target terminal. Specifically, the SGSN has both of the function as the paging incoming call control apparatus according to the first exemplary embodiment and the function as the paging suppression target terminal specifying apparatus according to the second exemplary embodiment. Hereinafter, description will be made with reference to the drawings. However, the parts already described in the exemplary embodiments above will be partially omitted.

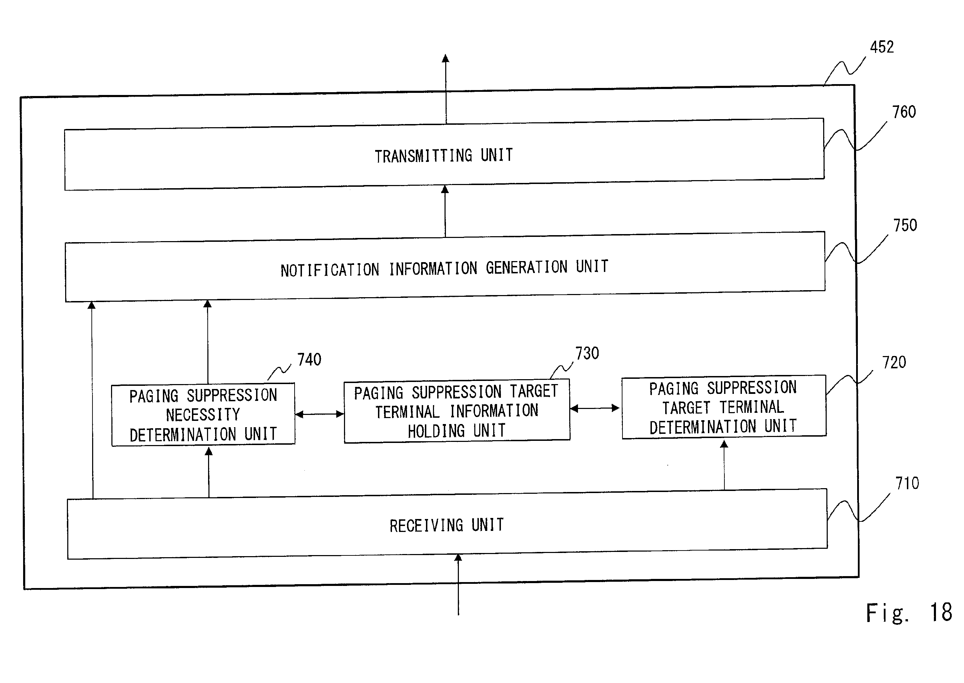

Fig. 18 is a block diagram showing a configuration of the SGSN 452 according to the seventh exemplary embodiment. The SGSN 452 includes a receiving unit 710, a paging suppression target terminal determination unit 720, a paging suppression target terminal information holding unit 730, a paging suppression necessity determination unit 740, a notification information generation unit 750, and a transmitting unit 760.

The receiving unit 710 receives Attach Request and Activate PDP Context Request from the MS 420. Further, the receiving unit 710 receives Insert Subscriber Data from the HLR 440. Further, the receiving unit 710 receives from the GGSN 460 PDU Notification Request which is a request for searching the MS 420 and activating a PDP context of the MS 420 and the GGSN 460.

The paging suppression target terminal determination unit 720 determines whether the MS 420 related to Insert Subscriber Data is the paging suppression target terminal based on the Insert Subscriber Data received by the receiving unit 710. When it is determined that the MS 420 indicated by the Insert Subscriber Data is the paging suppression target terminal as a result of the determination, the paging suppression target terminal determination unit 720 stores the identifier for identifying the MS 420 in the paging suppression target terminal information holding unit 730 as the paging suppression target terminal information.

The paging suppression target terminal information holding unit 730 holds the identifier for identifying the MS 420 determined as the paging suppression target terminal by the paging suppression target terminal determination unit 720 as the paging suppression target terminal information.

The paging suppression necessity determination unit 740 determines whether to perform incoming call control for the MS 420 specified by PDU Notification Request received from the receiving unit 710. Specifically, the paging suppression necessity determination unit 740 determines that paging is suppressed when the identifier for identifying the MS 420 specified by the PDU Notification Request is stored in the paging suppression target terminal information holding unit 730 as the paging suppression target terminal information.

The notification information generation unit 750 generates Update Location, Create PDP Context Request, and Insert Subscriber Data Ack based on Attach Request, Activate PDP Context Request, and Insert Subscriber Data transmitted from the receiving unit 710. Further, the notification information generation unit 750 generates PDU Notification Response based on the determination result in the paging suppression necessity determination unit 740.

The PDU Notification Response is a response indicating whether it is possible to accept the request for searching the MS 420 and activating the PDP context of the MS 420 and the GGSN 460, and includes the resulting information which indicates the result of possibility and information regarding causes when the activation cannot be performed. When it is determined that the incoming call control is performed on the MS 420 specified by PDU Notification Request that is notified, or paging is suppressed as a result of the determination in the paging suppression necessity determination unit 740, the notification information generation unit 750 generates PDU Notification Response including the information indicating that paging is not performed.

The transmitting unit 760 transmits Update Location, Insert Subscriber Data Ack, Create PDP Context Request, and PDU Notification Response generated by the notification information generation unit 750 to the HLR 440 and the GGSN 460.

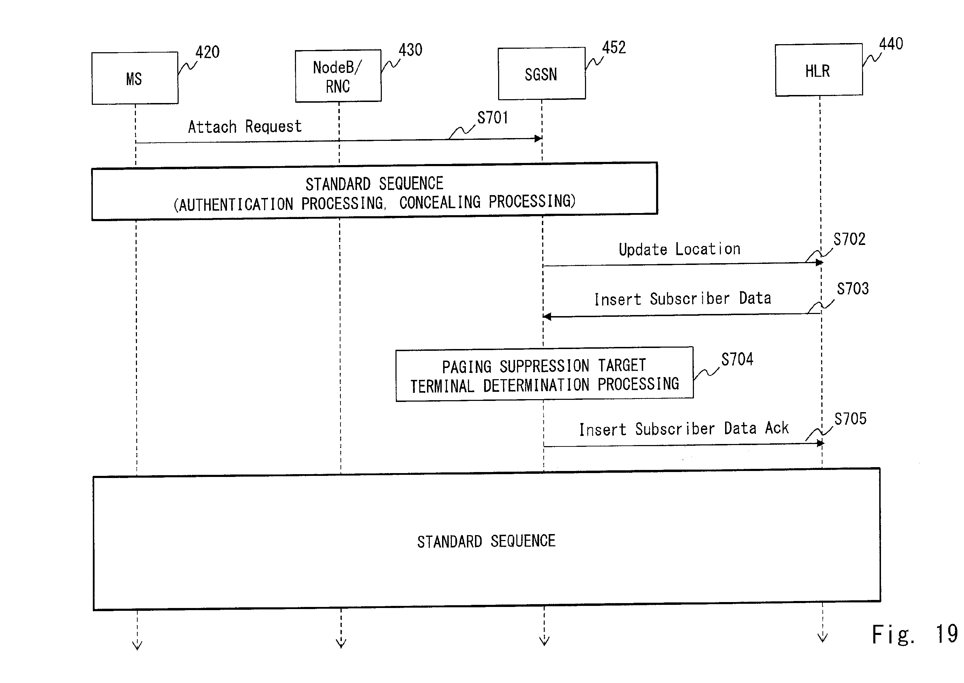

Next, an operation of the mobile communication system according to the seventh exemplary embodiment will be described. Fig. 19 is a sequence diagram showing a flow of location registration processing at the time of attaching. Since processes other than Step S704 are the same to the flow of the location registration processing shown in Fig. 15, the description thereof will be omitted.

In the Step S704, the SGSN 452 performs processing to determine whether the MS 420 specified by Insert Subscriber Data transmitted from the HLR 440 is the paging suppression target terminal. When it is determined that the terminal is the paging suppression target terminal, the SGSN 452 stores the identifier for identifying the MS 420 in the internal holding unit as the paging suppression target terminal information.

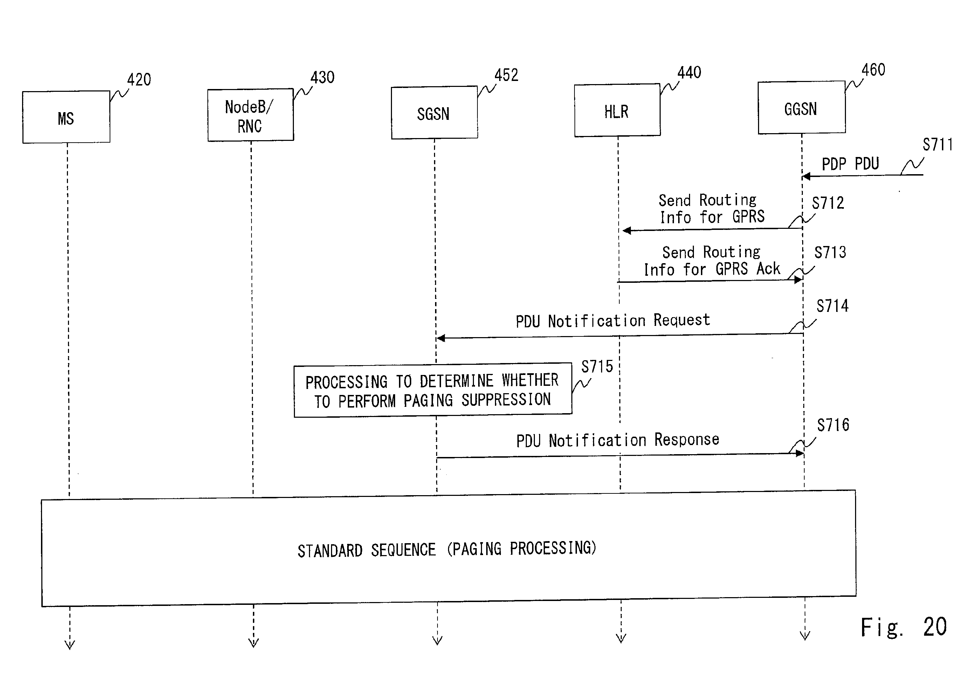

Next, with reference to a sequence diagram shown in Fig. 20, a flow of an operation when a packet is transmitted from the network side will be described.

Upon receiving PDP PDU which is a user data packet transmitted from the external network to the MS (Step S711), the GGSN 460 transmits Send Routing Info For GPRS to the HLR 440 to inquire the location of the MS related to the packet arrival (Step S712).

The GGSN 460 receives Send Routing Info For GPRS Ack from the HLR 440 (Step S713), and transmits PDU Notification Request to the SGSN indicated by the response (Step S714).

Upon receiving PDU Notification Request from the GGSN 460, the SGSN 452 determines whether to suppress paging to the MS specified by the request (Step S715). Specifically, the SGSN 452 checks whether the identifier of the MS specified by the PDU Notification Request is determined to be the paging suppression target terminal in the Step S704 in Fig. 19 and is stored as the paging suppression target terminal information. When the identifier is stored as the paging suppression target terminal information as a result of the check, it is determined that paging suppression is to be performed.

The SGSN 452 transmits PDU Notification Response to the GGSN 460 (Step S716). When it is determined in the Step S715 that paging suppression is performed, the SGSN 452 adds the information indicating paging suppression is to be performed to the PDU Notification Response to send the PDU Notification Response.

After PDU Notification Response is transmitted, the paging processing is proceeded according to the standard sequence. However, when it is determined in the SGSN 452 that paging suppression is to be performed and the PDU Notification Response is transmitted to the GGSN 460 with the information indicating that paging suppression is to be performed, the following processing is not performed. Specifically, the SGSN 452 completes the processing without transmitting Request PDP Context Activation that requests activation of the PDP context to the MS 420.

As described above, the SGSN according to the seventh exemplary embodiment performs processing to determine whether the terminal is the paging suppression target terminal, and holds the paging suppression target terminal information. Then, upon receiving PDU Notification Request from the higher order apparatus, the SGSN refers to the paging suppression target terminal information that is held in the SGSN to determine whether to suppress paging.

By employing such a configuration, it is possible to incorporate the paging suppression function in the network while keeping the use of the GGSN 460 which is the existing packet switchboard.

Further, when paging suppression is performed by the GGSN 460, it is impossible to suppress paging connected from the GGSN 460 of another communication carrier to the SGSN 450 due to roaming or the like when the network is congested, for example. Meanwhile, as described above, by employing the configuration in which paging is suppressed by the SGSN 452, it is possible to prevent the occurrence of unwanted paging from another GGSN 460 and encouragement of congestion between a mobile equipment and a base station.

While the case has been described above in which the SGSN 452 determines whether the MS specified by Insert Subscriber data is the paging suppression target terminal upon receiving the Insert Subscriber data, it is not limited to this. As is similar to other exemplary embodiments, the SGSN 452 may perform determination for the MS which has transmitted Attach Request upon receiving the Attach Request, or may perform determination for the MS which has transmitted Activate PDP Context Request upon receiving the Activate PDP Context Request.

### (Eighth exemplary embodiment)

A mobile communication system according to an eighth exemplary embodiment is a mobile communication system that employs the E-UTRAN system shown in Fig. 11. Compared to the fifth exemplary embodiment, Serving Gateway performs determination of paging suppression in the eighth exemplary embodiment. Serving Gateway including a paging suppression function according to the eighth exemplary embodiment is expressed by an S-GW 551. Hereinafter, the eighth exemplary embodiment of the present invention will be described with reference to the drawings. Note that the parts described in each of the exemplary embodiments will be partially omitted for the sake of clarification of the invention.

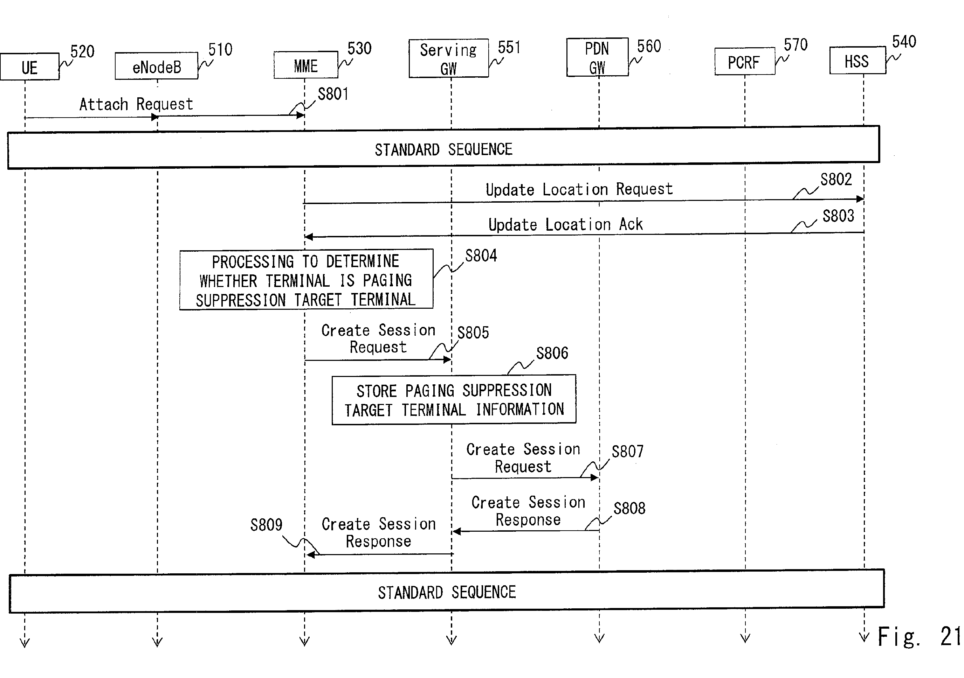

Fig. 21 is a sequence diagram showing an operation at the time of attaching in the mobile communication system according to the eighth exemplary embodiment. Since Step S801 to Step S804 are the same to Step S501 to Step S504 shown in Fig. 12, the description thereof will be omitted.

When the MME 530 determines that the terminal is the paging suppression target terminal by the determination processing in the Step S804, the MME 530 adds the identifier indicating the UE in which paging should be suppressed and creates Create Session Request. Then the MME 530 transmits Create Session Request to the S-GW 551 (Step S805).

The Create Session Request is a request by the MME 530 to have a session from the S-GW 551 to the P-GW 560 created. When the identifier indicating the UE in which paging should be suppressed is added to Create Session Request received from the MME 530, the S-GW 551 stores the identifier for identifying the UE 520 related to the Create Session Request in the internal holding unit as the paging suppression target terminal information (Step S806).

Subsequently, the S-GW 551 transmits the Create Session Request to the P-GW 560 which is a higher order apparatus and is a packet switchboard connected to the external network (Step S807). The P-GW 560 sends the response by transmitting Create Session Response to the S-GW 551 (Step S808).

The S-GW 551 receives Create Session Response from the P-GW 560, and transmits the Create Session Response to the MME 530 (Step S809). After that, processing is performed according to the standard process sequence, and location registration is completed.

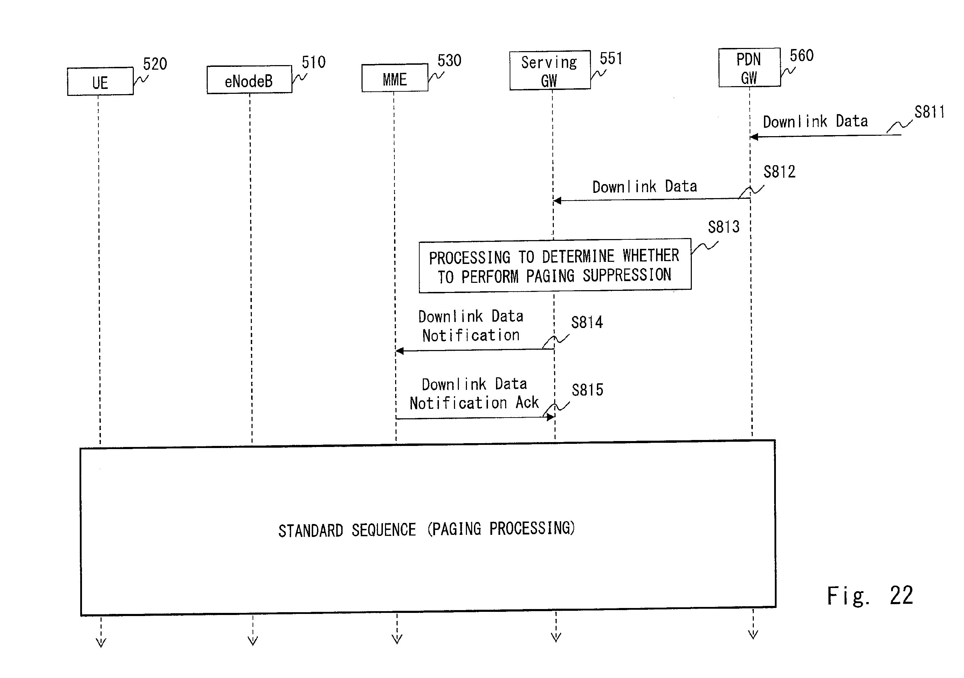

Next, with reference to a sequence diagram shown in Fig. 22, paging suppression processing will be described when a packet is received from the network.

The P-GW 560 receives Downlink Data which is a user data packet transmitted from the external network to the UE (Step S811), and transmits the Downlink Data to the S-GW 551 (Step S812). Upon receiving the Downlink Data, the S-GW 551 determines whether to perform paging suppression based on the Downlink Data (Step S813).

More specifically, the S-GW 551 checks whether the identifier specifying the UE 520 which is the destination of Downlink Data which is the incoming packet is stored in the internal holding unit as the paging suppression target terminal information.

When the identifier specifying the UE 520 which is the destination of Downlink Data is stored as the paging suppression target terminal information as a result of the check, the S-GW 551 determines that paging to the UE 520 is suppressed and stops the following processing. On the other hand, when the identifier specifying the UE 520 which is the destination of Downlink Data is not stored as the paging suppression target terminal information, the S-GW 551 performs paging to the UE 520 according to the standard sequence.

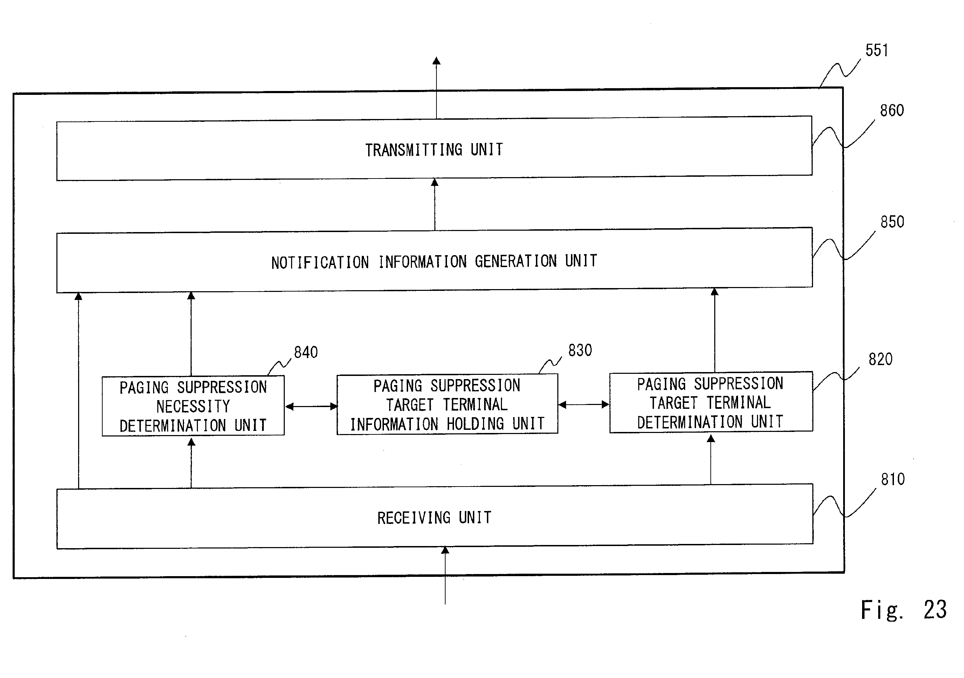

Fig. 23 is a block diagram showing a configuration of the S-GW 551 according to the eighth exemplary embodiment. The S-GW 551 includes a receiving unit 810, a paging suppression target terminal determination unit 820, a paging suppression target terminal information holding unit 830, a paging suppression necessity determination unit 840, a notification information generation unit 850, and a transmitting unit 860.

The receiving unit 810 receives Create Session Request, Downlink Data Notification Ack, Create Session Response, and Downlink Data from the MME 530 and the P-GW 560.

The paging suppression target terminal determination unit 820 determines whether the UE related to the received Create Session Request is the paging suppression target terminal. More specifically, when the identifier indicating the UE in which paging should be suppressed is given to the received Create Session Request, the paging suppression target terminal determination unit 820 determines that this UE is the paging suppression target terminal.

When it is determined in the paging suppression target terminal determination unit 820 that the terminal is the paging suppression target terminal, the paging suppression target terminal information holding unit 830 holds the identifier specifying the UE as the paging suppression target terminal information.

The paging suppression necessity determination unit 840 determines whether to suppress paging based on Downlink Data received by the receiving unit 810. More specifically, when the identifier for specifying the UE to which the Downlink Data is transmitted is stored in the paging suppression target terminal information holding unit 830 as the paging suppression target terminal information, it is determined that paging is suppressed.

The notification information generation unit 850 generates Create Session Response for the MME 530 based on Create Session Response received from the receiving unit 810. Further, the notification information generation unit 850 generates Create Session Request for the P-GW 560 based on Create Session Request received from the paging suppression target terminal determination unit 820. Further, the notification information generation unit 850 generates Downlink data Notification for the MME 530 based on the determination result in the paging suppression necessity determination unit 840. However, when it is determined that the paging suppression necessity determination unit 840 suppresses paging as a result of the determination, the Downlink Data Notification is not generated.

The transmitting unit 860 transmits each information generated by the notification information generation unit 850 to the corresponding node.

As described above, it is determined whether the S-GW performs paging suppression in the mobile communication system according to the eighth exemplary embodiment. According to the configuration, it is also possible to suppress paging that occurs by connection from the P-GW 560 of another communication carrier due to roaming, for example.

### (Ninth exemplary embodiment)

A mobile communication system according to a ninth exemplary embodiment is a mobile communication system that employs the E-UTRAN system shown in Fig. 11. Compared to the eighth exemplary embodiment, Mobility Management Entity performs determination of paging suppression in the ninth exemplary embodiment. Mobility Management Entity including a paging suppression function according to the ninth exemplary embodiment is expressed by an MME 531. Hereinafter, with reference to the drawings, the ninth exemplary embodiment of the present invention will be described. Note that the parts described in each of the exemplary embodiments will be partially omitted for the sake of clarification of the invention.

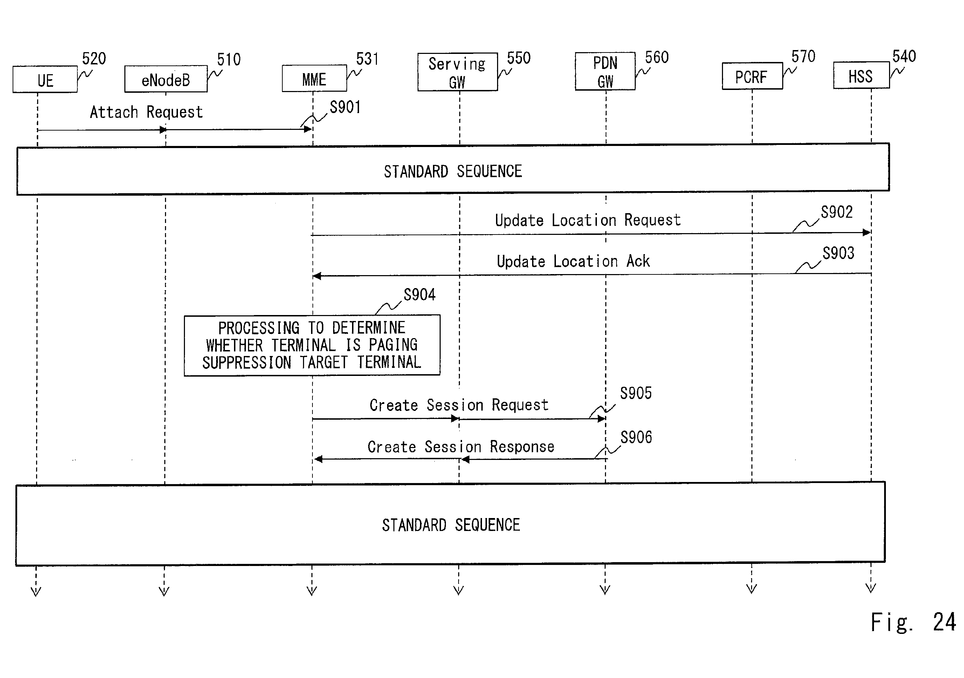

Fig. 24 is a sequence diagram showing an operation at the time of attaching according to the mobile communication system according to the ninth exemplary embodiment. Since Step S901 to Step S903 are the same to Step S501 to Step S503 shown in Fig. 12, the description will be omitted.

After receiving Update Location Ack from the HSS 540, the MME 531 determines whether the UE 520 that performs the location registration is the paging suppression target terminal (Step S904). When it is determined that the UE 520 is the paging suppression target terminal, the identifier for identifying the UE 520 related to the location registration is stored in the internal holding unit as the paging suppression target terminal information.

After that, the MME 531 transmits Create Session Request which is a request for generating a new data path to the P-GW 560 via the S-GW 550 (Step S905), to receive Create Session Response (Step S906). After that, the location registration processing is completed according to the standard sequence.

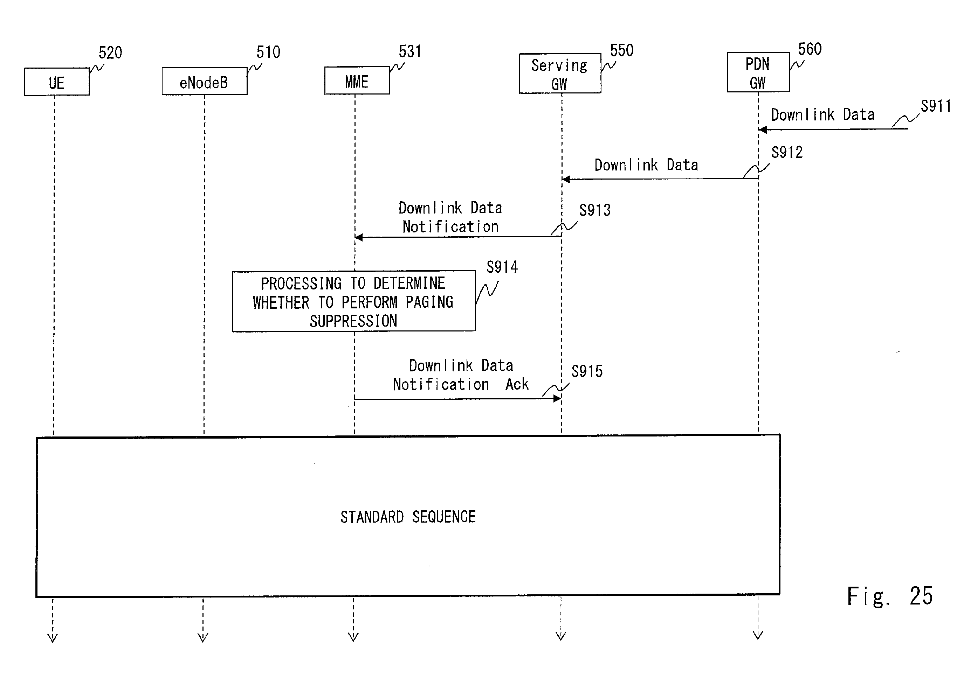

Fig. 25 is a sequence diagram showing a process flow when Downlink Data is received from the external network.

Upon receiving Downlink Data from the external network (Step S911), the P-GW 560 transmits the Downlink Data to the S-GW 550 which is a lower order apparatus (Step S912).

The S-GW 550 that has received Downlink Data transmits Downlink Data Notification to the MME 531 (Step S913).

The MME 531 that has received the Downlink Data Notification refers to the paging suppression target terminal information held in the MME 531 to determine whether to perform paging suppression (Step S914). More specifically, when the identifier of the UE identified by Downlink Data Notification is stored as the paging suppression target terminal information, it is determined that paging is suppressed.

When paging is suppressed, the MME 531 adds the information indicating that paging suppression is performed to Downlink Data Notification Ack to transmit Downlink Data Notification Ack to the S-GW 550, and does not perform the following paging processing (Step S915). On the other hand, when paging is not suppressed, standard Downlink Data Notification Ack is transmitted to the S-GW 550, and paging is performed according to the standard sequence.

Next, a configuration of the MME 531 according to the ninth exemplary embodiment will be described. Since the block configuration of the MME 531 is similar to that of the SGSN 452 shown in Fig. 18, description will be made with reference to Fig. 18.

In the MME 531, the receiving unit 710 receives Attach Request, Update Location Ack, Create Session Response, Downlink data Notification and the like from the UE 520, the HSS 540, and the S-GW 550.

The paging suppression target terminal determination unit 720 determines whether the UE 520 identified by Update Location Ack received by the receiving unit 710 is the paging suppression target terminal. The determination method may be performed according to the flow shown in Fig. 7. When the paging suppression target terminal determination unit 720 determines that the UE 520 identified by the Update Location Ack is the paging suppression target terminal, the identifier for identifying the UE 520 is stored in the paging suppression target terminal information holding unit 730 as the paging suppression target terminal information.

The paging suppression necessity determination unit 740 determines whether to suppress paging based on downlink data Notification received by the receiving unit 710. More specifically, when the identifier that specifies the UE 520 related to the downlink data Notification is stored as the paging suppression target terminal information, it is determined that paging is to be suppressed.

The notification information generation unit 750 generates each of Update Location Request, Create Session Request, and Downlink data Notification Ack. When it is determined in the paging suppression necessity determination unit 740 that paging is to be suppressed, Downlink data Notification Ack is generated including the information indicating that paging is to be suppressed.

The transmitting unit 760 transmits each of Update Location Request, Create Session Request, and Downlink data Notification Ack that are generated to the corresponding node.

As described above, the MME according to the ninth exemplary embodiment has both of the function of determining the paging suppression target terminal and the function of suppressing paging. The MME 531 is a node for performing mobility management including functions of storing and managing the subscriber information received from the HSS 540. Accordingly, it is preferable for the MME 531 to manage the paging suppression target terminal information in addition to the existing subscriber information since this makes it possible to achieve the paging suppression function without greatly changing the network design. In summary, it is possible to achieve the paging suppression function without especially changing the design of the S-GW 550 or the P-GW 560.

The determination regarding whether the terminal is the paging suppression target terminal may be performed when receiving Attach Request also in the MME 531 according to the ninth exemplary embodiment. Specifically, it is possible to employ the configuration in which the paging suppression target terminal determination unit 720 determines whether the UE 520 which has transmitted Attach Request which is a location registration request is the paging suppression target terminal based on the congestion state, the terminal type, and the like.

### (Tenth exemplary embodiment)

A mobile communication system according to a tenth exemplary embodiment is a mobile communication system in which the mobile communication system employing the UTRAN system shown in Fig. 8 and the mobile communication system employing the E-UTRAN system shown in Fig. 11 are mixed. In the mobile communication system, the SGSN 452 and the MME 531 are interconnected. The tenth exemplary embodiment has a characteristic that the information regarding a terminal which is the target of paging suppression is shared between the SGSN 452 and the MME 531. In the following description, the tenth exemplary embodiment of the present invention will be described with reference to the drawings. Note that the parts described in each of the exemplary embodiments will be partially omitted for the sake of clarification of the invention.

The block configuration of each of the SGSN 452 and the MME 531 according to the tenth exemplary embodiment is similar to the block configuration shown in Fig. 18. This will be described with reference to Fig. 18.

The SGSN 452 according to the tenth exemplary embodiment stores the identifier for identifying the radio communication terminal in which paging is suppressed in the paging suppression target terminal information holding unit 730 as the paging suppression target terminal information according to the flow shown in Fig. 19 described with reference to the seventh exemplary embodiment.

Further, the MME 531 according to the tenth exemplary embodiment stores the identifier for identifying the radio communication terminal in which paging is suppressed in the paging suppression target terminal information holding unit 730 as the paging suppression target terminal information according to the flow shown in Fig. 24 described with reference to the ninth exemplary embodiment.

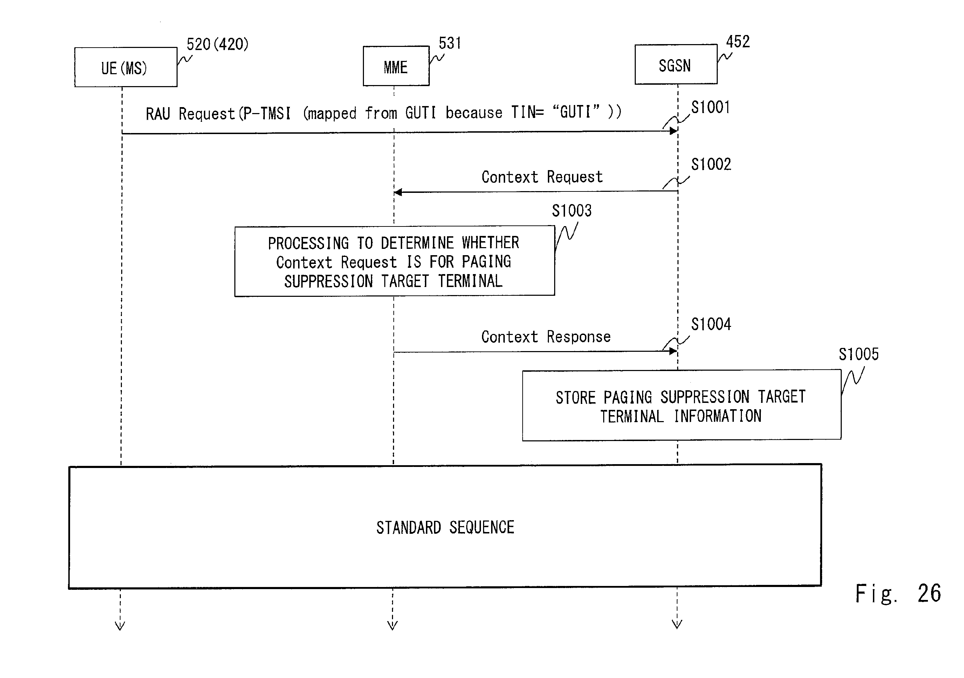

Fig. 26 is a sequence diagram showing a process flow when RAU Request which is a terminal location information update request is transmitted from the radio communication terminal (MS/UE) to the SGSN 452.

The SGSN 452 receives RAU Request which is the terminal location information update request from the radio communication terminal (Step S1001). The SGSN 452 which has received the RAU Request transmits Context Request to the MME 531 (Step S1002).

The Context Request is the request of subscriber information from the SGSN 452 to the MME 531, and includes a subscriber identifier which was used before. When the receiving unit 710 receives Context Request from the SGSN 452 in the MME 531, the paging suppression target terminal determination unit 720 determines whether the radio communication terminal related to the Context Request is the target of paging suppression (Step S1003).

More specifically, when the Context Request is for the radio communication terminal corresponding to the identifier stored as the paging suppression target terminal information, it is determined that the radio communication terminal is the paging suppression target.

When it is determined in the paging suppression target terminal determination unit that the Context Request is for the radio communication terminal which is the target of paging suppression, the notification information generation unit 750 in the MME 531 generates Context Response together with the information indicating that the terminal is the paging suppression target terminal.

The transmitting unit 760 in the MME 531 transmits Context Response that is generated to the SGSN 452, thereby notifying the SGSN 452 that the radio communication terminal related to the Context Request is the terminal which is the target of paging suppression (Step S1004).

When receiving Context Response including the information indicating that Context Response is for the radio communication terminal which is the target of paging suppression from the MME 531, the SGSN 452 stores the identifier for identifying the radio communication terminal in the internal paging suppression target terminal information holding unit 730 as the paging suppression target terminal information (Step S1005).

From the processing above, the information regarding the paging suppression target terminal stored and managed by the MME 531 is transmitted to the SGSN 452 together with Context Response, thereby achieving sharing of the paging suppression target terminal information between the MME 531 and the SGSN 452.

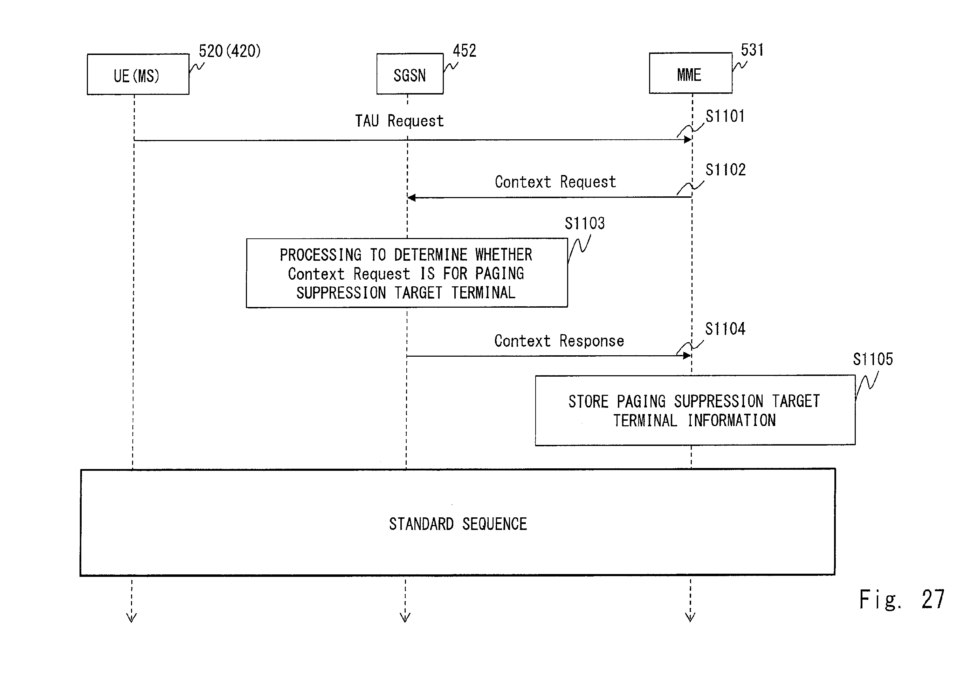

Fig. 27 is a sequence diagram showing a process flow when TAU Request which is the terminal location information update request is transmitted from the radio communication terminal (MS/UE) to the MME 531.

The MME 531 receives TAU Request which is a terminal location information update request from the radio communication terminal (Step S1101). The MME 531 which has received the TAU Request transmits Context Request to the SGSN 452 (Step S1102).

The Context Request is the request of the subscriber information from the MME 531 to the SGSN 452, and includes a subscriber identifier which was used before. When the receiving unit 710 receives Context Request from the MME 531 in the SGSN 452, the paging suppression target terminal determination unit 720 determines whether the radio communication terminal related to the Context Request is the target of paging suppression (Step S1103).

More specifically, when the Context Request is for the radio communication terminal corresponding to the identifier stored as the paging suppression target terminal information, it is determined that the radio communication terminal is the paging suppression target.

When it is determined in the paging suppression target terminal determination unit that Context Request is for the radio communication terminal which is the target of paging suppression, the notification information generation unit 750 in the SGSN 452 generates Context Response together with the information indicating the paging suppression target terminal.

The transmitting unit 760 in the SGSN 452 transmits Context Response that is generated to the MME 531, whereby it is notified to the MME 531 that the radio communication terminal related to the Context Request is the terminal which is the target of paging suppression (Step S1104).

Upon receiving Context Response including the information indicating that Context Response is for the radio communication terminal which is the target of paging suppression from the SGSN 452, the MME 531 stores the identifier for identifying the radio communication terminal in the internal paging suppression target terminal information holding unit 730 as the paging suppression target terminal information (Step S1105).

From the processing above, as is similar to Fig. 26, the information regarding the paging suppression target terminal stored and managed by the SGSN 452 is transmitted to the MME 531 together with Context Response, thereby accomplishing sharing of the paging suppression target terminal information between the SGSN 452 and the MME 531.

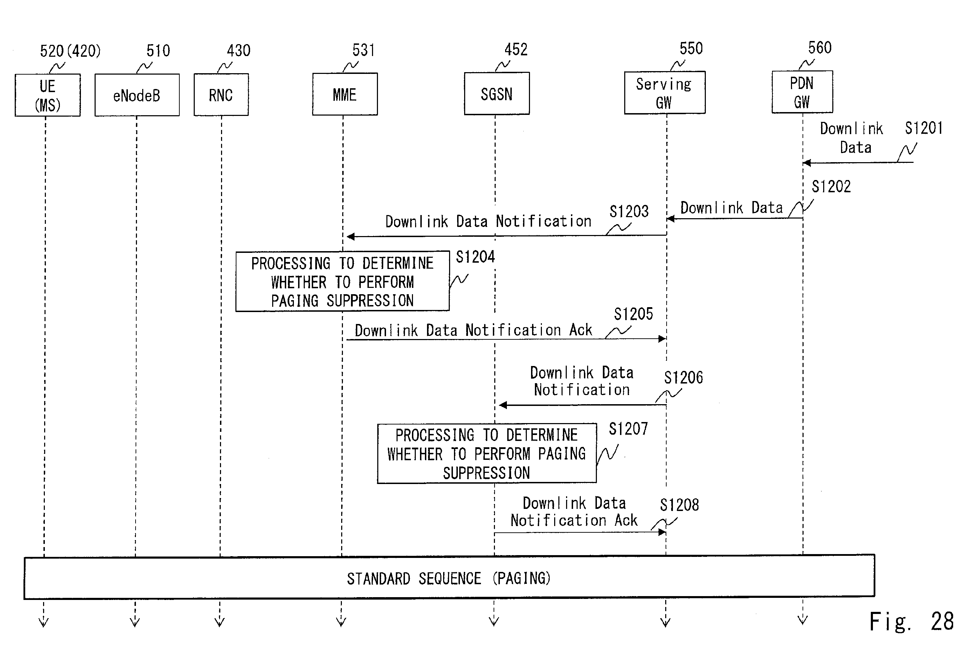

Next, with reference to a sequence diagram shown in Fig. 28, a flow of an operation will be described when the P-GW 560 receives Downlink Data which is packet arrival from the external network side in the state in which the paging suppression target terminal information is shared between the SGSN 452 and the MME 531.

Upon receiving Downlink data from the external network (Step S1201), the P-GW 560 transmits the Downlink data to the corresponding S-GW 550 (Step S1202).

The S-GW 550 transmits Downlink Data Notification to each of the MME 531 and the SGSN 452 (Step S1203, Step S1206).

The MME 531 that has received Downlink Data Notification performs processing to determine whether to perform paging suppression (Step S1204). When it is determined that the paging is to be suppressed, the MME 531 transmits Downlink Data Notification Ack to the S-GW 550 with the information indicating that the paging is to be suppressed (Step S1205).

Similarly, the SGSN 452 that has received Downlink Data Notification performs processing to determine whether to perform paging suppression (Step S1207). When it is determined that the paging is to be suppressed, the SGSN 452 transmits Downlink Data Notification Ack to the S-GW 550 with the information indicating that the paging is to be suppressed (Step S1208).

As described above, the mobile communication system according to the tenth exemplary embodiment is the mobile communication system in which UTRAN and E-UTRAN are mixed. The paging suppression target terminal information is included in Context Response and Context Response is notified between the MME 531 and the SGSN 452, thereby being able to share the paging suppression target terminal information.

The paging suppression processing that occurs again after the MME 531 or the SGSN 452 performs paging suppression in the Step S1204 or the Step S1207 may be performed by the S-GW 550. In this case, the S-GW 550 specifies that the terminal related to the paging is the paging suppression target based on Downlink Data Notification Ack which includes the information indicating that the paging is to be suppressed and is received from the MME 531 or the SGSN 452 in the Step S1205 or the Step S1208, and holds the information for identifying the terminal in the internal storage unit for a predetermined period of time as the paging suppression target terminal information. After that, when the S-GW 550 newly receives Downlink Data from the PDN-GW 560, the S-GW 550 determines whether the radio communication terminal related to the Downlink Data is the terminal which is the paging suppression target by referring to the paging suppression target terminal information that is temporarily stored. When the S-GW 550 determines that the terminal related to Downlink Data is the terminal which is the target of paging suppression as a result of the determination, the S-GW 550 does not transmit Downlink Data Notification to the MME 531 and the SGSN 452. By employing such a configuration, it is possible to further reduce unnecessary signaling occurred between the S-GW 550 and the MME 531 and between the S-GW 550 and the SGSN 452 without dramatically changing the system by sharing the information regarding the paging suppression target terminal with the S-GW 550 in addition to the MME 531 and the SGSN 452 using Downlink Data Notification Ack.

### (Eleventh exemplary embodiment)

In the seventh exemplary embodiment stated above, the SGSN determines whether the terminal is the paging suppression target terminal using information such as the network congestion state, the terminal type, the contract type and the like at a timing at which Insert Subscriber Data is received from the HLR in the attachment processing. Note that the frequency that Attach Request is transmitted from mobile terminals has been increasing due to further restriction on the use of mobile phones on trains or planes and the improvement of the frequency with which smartphones that consume large power run out of battery.

Under such circumstances, when the SGSN performs processing to determine whether the terminal is the aforementioned paging suppression terminal every time the SGSN receives Attach Request, the load applied to the SGSN increases. The eleventh exemplary embodiment aims to mitigate the processing of the SGSN. Hereinafter, description will be made specifically with reference to the drawings.

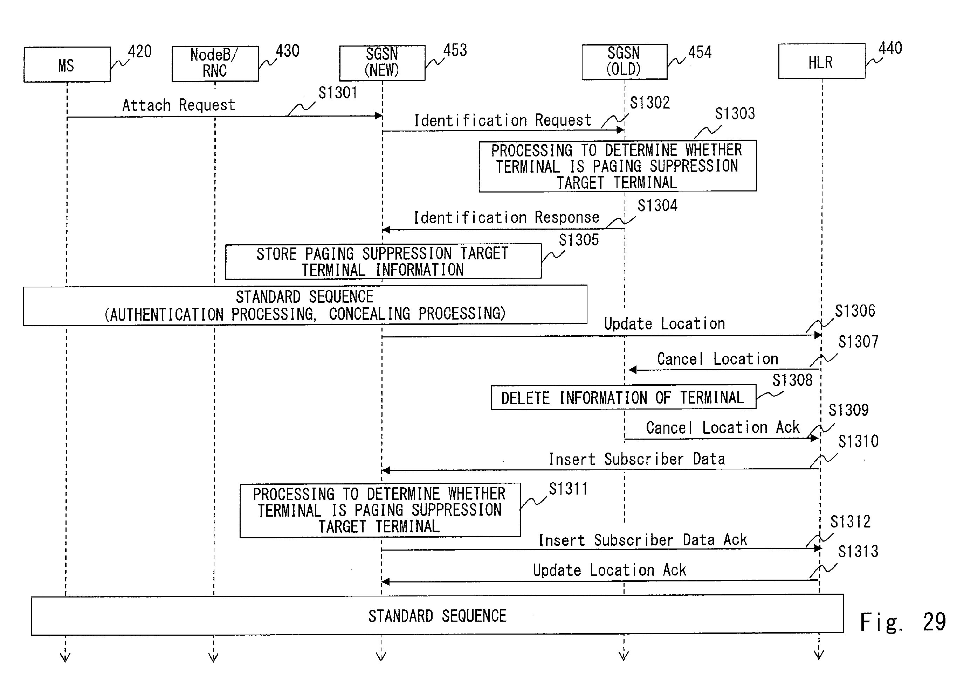

Fig. 29 is a sequence diagram showing an attaching operation in the mobile communication system according to the eleventh exemplary embodiment.

In Fig. 29, an SGSN(NEW) 453 indicates the SGSN connected by the MS 420 in the current attachment processing, and corresponds to the SGSNs 450 to 452 described above in each of the exemplary embodiments. On the other hand, an SGSN(OLD) 454 indicates the SGSN that served the MS 420 prior to detachment.

The MS 420 transmits Attach Request which is a location registration request to the SGSN(NEW) 453 via the NodeB/RNC 430 at the time of attaching (Step S1301). The SGSN(NEW) 453 that has received the Attach Request transmits Identification Request that requests the identification information of the terminal to the SGSN(OLD) 454 (Step S1302).

The SGSN(OLD) 454 that received Identification Request from the SGSN(NEW) 453 which is another SGSN determines whether the MS 420 related to the Identification Request is the paging suppression target terminal (Step S1303). More specifically, the SGSN(OLD) 454 refers to the paging suppression terminal information held in the internal paging suppression target terminal information holding unit to check whether the information for identifying the MS 420 is stored as the paging suppression target terminal information.

When it is determined that the MS 420 is the paging suppression target terminal as a result of the determination in the Step S1303, the SGSN(OLD) 454 gives the identifier indicating that the MS 420 related to the Identification Request is the paging suppression target terminal to generate Identification Response, to transmit Identification Response to the SGSN(NEW) 453 (Step S1304).

The SGSN(NEW) 453 that has received Identification Response from the SGSN(OLD) 454 performs check and determination regarding whether the identifier indicating the paging suppression target terminal is given to the Identification Response. When the identifier indicating the paging suppression target terminal is given to Identification Response, the SGSN(NEW) 453 stores the identifier for identifying the terminal 420 in the internal paging suppression target terminal information holding unit as the paging suppression target terminal information (Step S1305).

After that, standard authentication processing and concealing processing are performed among the MS 420, the SGSN(NEW) 453, the HLR 440 and the like.

After authentication processing or the like is completed, the SGSN(NEW) 453 transmits Update Location which is the location registration information to the HLR 440 (Step S1306).

Upon receiving the Update Location, the HLR 440 transmits Cancel Location which is a location delete message to the SGSN(OLD) 454 (Step S1307). The terminal information (IMSI or the like) of the MS 420 related to the received Update Location is included in the location delete message.

The SGSN(OLD) 454 that has received Cancel Location from the HLR 440 deletes information of the terminal related to the Cancel Location (Step S1308).

The SGSN(OLD) 454 transmits Cancel Location Ack to the HLR 440 after executing delete at the Step S1308 (Step S1309). The HLR 440 that has received the Cancel Location Ack transmits Insert Subscriber Data which is subscriber data registration to the SGSN(NEW) 453 (Step S1310).

The SGSN(NEW) 453 that has received Insert Subscriber Data transmitted from the HLR 440 determines whether the MS 420 which performs the location registration request is the terminal which is the target of paging suppression based on the Insert Subscriber Data (Step S1311). When it is determined in the determination processing that the terminal is the paging suppression target terminal, the SGSN(NEW) 453 stores the identifier for identifying the MS 420 as the paging suppression target terminal information in the internal paging suppression target terminal information holding unit.

After performing the determination processing in the Step S1311 and the storage processing as necessary, the SGSN(NEW) 453 transmits Insert Subscriber Data Ack to the HLR 440 (Step S1312), and the HLR 440 sends Update Location Ack back to the SGSN(NEW) 453 (Step S1313). After that, processing is proceeded according to the standard flow and the attachment processing is completed.

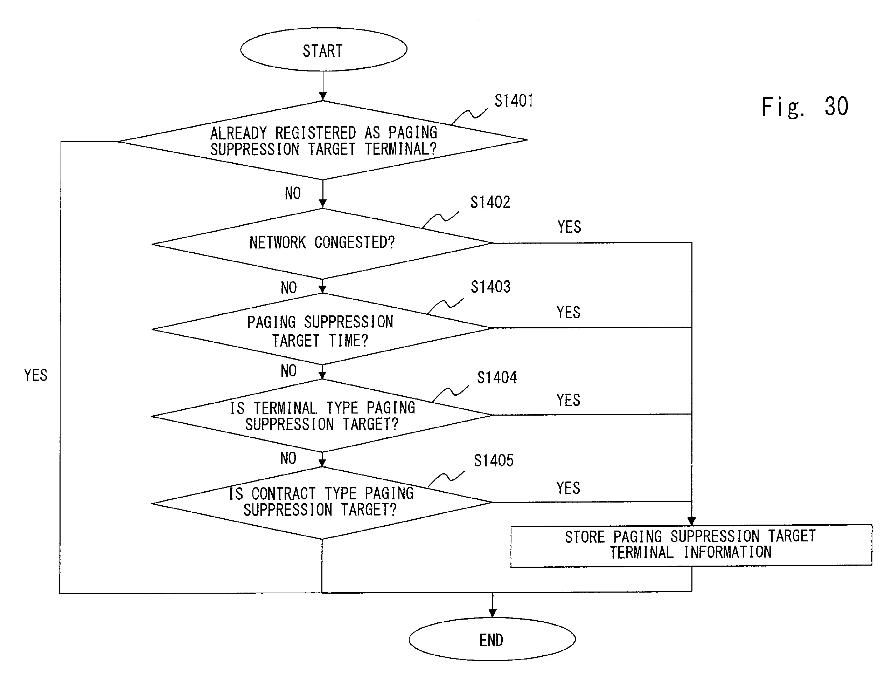

Fig. 30 is a flowchart showing a flow of the determination processing in the Step S1311. Note that the processing to determine whether the terminal is the paging suppression target terminal such as the determination processing in the Step S704 described with reference to Fig. 19 and the determination processing in the Step S904 described with reference to Fig. 24 may be the determination processing as shown in Fig. 30. A block configuration of the SGSN 453 will be described with reference to Fig. 18.

In the SGSN 453, when Insert Subscriber Data is received by the receiving unit 710, the paging suppression target terminal determination unit 720 determines whether the MS 420 related to the Insert Subscriber Data has already been registered as the paging suppression target terminal (Step S1401). More specifically, the paging suppression target terminal determination unit 720 checks whether the identifier for identifying the MS 420 has already been stored in the paging suppression target terminal information holding unit 730 as the paging suppression target terminal information.

When it is determined that the identifier has already been registered as a result of the determination in the Step S1401, the determination processing is completed and the process goes to Step S 13 12 in Fig. 29. On the other hand, when it is determined that the MS 420 has not been registered as the paging suppression target terminal as a result of the determination in the Step S1401, the process goes to Step S1402.

Next, the paging suppression target terminal determination unit 720 determines whether the network is in the congestion state (Step S1402). When the network is not in the congestion state, the paging suppression target terminal determination unit 720 determines whether the current time is in the time period in which paging suppression is performed (Step S1403).

When the current time is not in the time period in which paging suppression is performed, the paging suppression target terminal determination unit 720 determines whether the terminal type of the MS 420 is the target of paging suppression (Step S1404).

When the terminal type of the MS 420 is not the target of paging suppression, the paging suppression target terminal determination unit 720 refers to the contract type of the subscriber information, to determine whether the contract type is the target of paging suppression (Step S1405).

When the contract type of the MS 420 is not the target of paging suppression, the determination processing is completed and the process goes to the Step S 13 12 in Fig. 29. On the other hand, when it is determined in the Step S1402 to Step S1405 stated above that (1) the network is in the congestion state, (2) the time period is the paging suppression target, (3) the terminal type is the paging suppression target, and (4) the contract type is the paging suppression target, the paging suppression target terminal determination unit 720 determines that the MS 420 is the paging suppression target terminal. Then, the paging suppression target terminal determination unit 720 stores the identifier for identifying the MS 420 in the paging suppression target terminal information holding unit 730 as the paging suppression target terminal information (Step S1406). Then the determination processing is completed and the process goes to Step S1312 in Fig. 29.

As described above, the SGSN(NEW) 453 according to the eleventh exemplary embodiment checks whether the terminal related to the location registration request has already been registered as the paging suppression target terminal before performing specific determination processing that determines whether the terminal is the paging suppression target. When the terminal has been registered as the paging suppression target terminal as a result of the check, it is possible to skip the specific determination processing, thereby being able to mitigate the processing load in the SGSN(NEW) 453. The SGSN(NEW) 453 that receives attach Request is able to receive and store the information indicating the paging suppression terminal from the SGSN(OLD) 454 that was served before, thereby being able to share the determination result regarding whether the terminal is the target of paging suppression that has already been performed in another SGSN.

The paging suppression processing in the SGSN is similar to that shown in Fig. 20; therefore description thereof will be omitted.

Further, while description has been made of the case in which the mobile communication system according to the description above is UTRAN, it is not limited to this. The same description may be applied also to E-UTRAN. Specifically, the MME(NEW) connected at the time of attaching this time transmits Identification Request for requesting identification information of the terminal to the MME(OLD) that was served before and receives Identification Response. When the terminal is registered in the MME(OLD) as the paging suppression target terminal, the MME(OLD) gives the identifier indicating it to transmit Identification Response. Accordingly, the MME(NEW) checks and determines whether the identifier indicating the paging suppression target terminal is given upon receiving Identification Response. When the identifier is given, the identifier specifying the terminal is stored in the internal paging suppression target terminal information holding unit as the paging suppression target terminal information. By employing such a configuration, in the MME in E-UTRAN, as is similar to the SGSN in UTRAN, the paging suppression target terminal information can be shared between MMEs, thereby being able to mitigate the determination processing that determines whether the terminal is the paging suppression target terminal.

### (Twelfth exemplary embodiment)

A twelfth exemplary embodiment aims to incorporate a system for achieving the suppression function also in a short message service (SMS). Hereinafter, the twelfth exemplary embodiment will be described in detail with reference to the drawings.

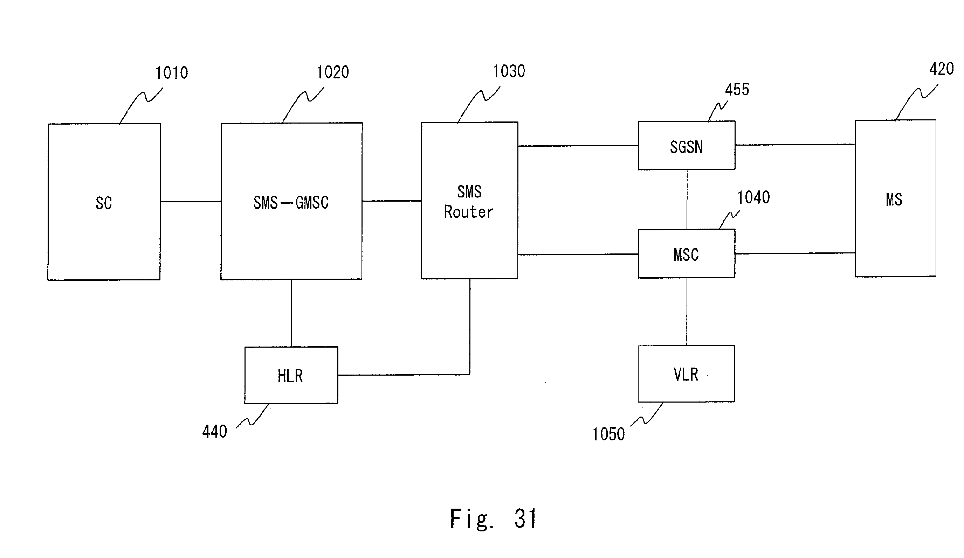

Fig. 31 is a block diagram showing a configuration of a radio communication system according to the twelfth exemplary embodiment. The radio communication system according to the twelfth exemplary embodiment includes a service center (SC) 1010, a SMS-gateway mobile switching center (SMS-GMSC) 1020, an SMS-router 1030, a mobile-services switching centre (MSC) 1040, an HLR 440, a visitor location register (VLR) 1050, an SGSN 455, and an MS 420. In Fig. 31, a NodeB/RNC corresponding to a base station is omitted.

The SC 1010 is an apparatus for managing short messages, and is connected to the SMS-GMSC 1020. The short message transmitted from each MS 420 is delivered to the SC 1010, and the SC 1010 transfers the received short messages to the SMS-GMSC 1020.

Upon receiving the short message from the SC 1010, the SMS-GMSC 1020 acquires the location information of the subscriber (MS 420) which is the destination of the short message from the HLR 440, to determine which SGSN 455 or MSC 1040 should be used as a path. The SMS-GMSC 1020 transfers the short message to the SGSN 455 or the MSC 1040 that is determined through the corresponding SMS-Router 1030.

The SMS-Router 1030 is an apparatus that bundles different nodes (networks) of the SGSN 455 and the MSC 1040, and allows the SMS-GMSC 1020 to transfer the short message to both of the SGSN 455 and the MSC 1040. When only one of the SGSN 455 and the MSC 1040 is used in the transmission of the short message service, the SMS-Router 1030 may not be provided in the system.

The MSC 1040 is a service switching device that includes a function for achieving call connection control, service control and the like to provide the mobile communication service. When receiving a short message that is transmitted from the SMS-GMSC 1020 via the SMS-Router 1030, the MSC 1040 refers to the subscriber information stored in the VLR 1050 to specify the location of the MS 420, and transmits the short message to the MS 420.

Further, when receiving the short message that is transmitted from the SMS-GMSC 1020 via the SMS-Router 1030, the SGSN 455 transmits the short message to the MS 420.

The VLR 1050 is a subscriber information management apparatus that manages and holds subscriber information in place of the HLR 440, and is provided for each MSC 1040.

Next, an operation of an MT-SMS (SMS terminal incoming call processing) according to the twelfth exemplary embodiment will be described. In the twelfth exemplary embodiment, information regarding the terminal which is the target of paging suppression needs to be held in the SGSN 455 and the MSC 1040 transmitting the short message as the first processing. In this example, a method of storing the paging suppression target terminal information in the MSC 1040 will be specially described in detail.

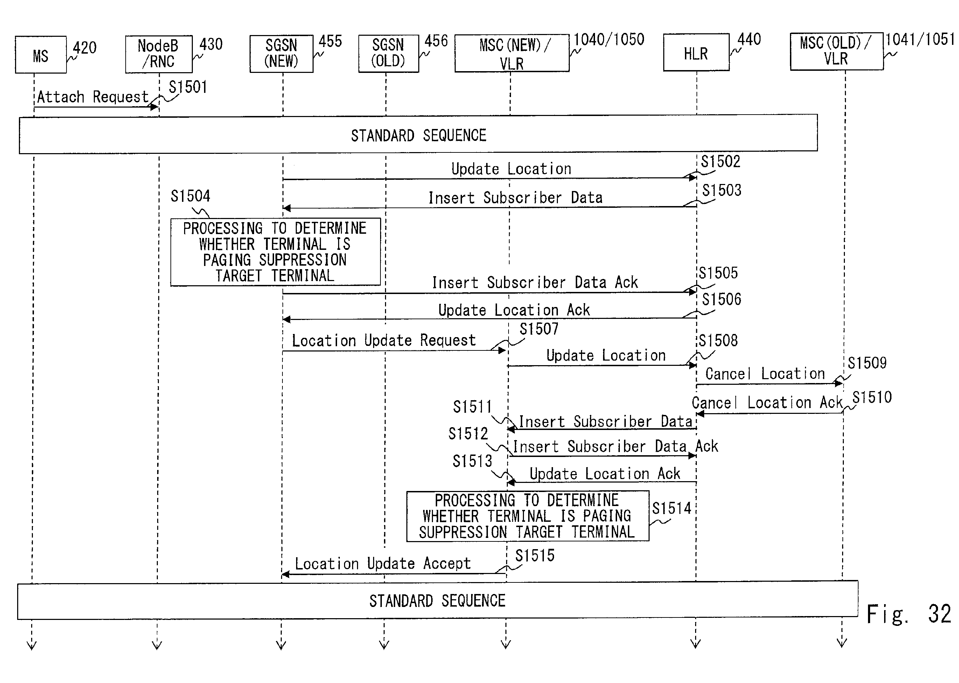

Fig. 32 is a sequence diagram showing an operation of attachment processing in the twelfth exemplary embodiment.
In this example, the SGSN(NEW) 455 indicates the SGSN which receives the current attachment request and the SGSN(OLD) 456 indicates the SGSN that served the MS 420 before detachment. Further, the MSC(NEW) 1040 indicates the MSC corresponding to the SGSN(NEW) 455 and the MSC(OLD) 1041 indicates the MSC corresponding to the SGSN(OLD) 456.

Step S1501 to Step S1505 are substantially the same to Step S701 to Step S705 already described in Fig. 19; thus description will be omitted.

After the Step S1505, Update Location Ack is sent back to the SGSN(NEW) 455 (Step S1506), and then the SGSN 455 transmits Location Update Request that requests location update of the VLR 1050 provided in the MSC(NEW) 1040 to the MSC(NEW) 1040 (Step S1507).

The MSC(NEW) 1040 which has received Location Update Request transmits Update Location which is the location registration information to the HLR 440 (Step S1508). The HLR 440 that has received Update Location from the MSC(NEW) 1040 transmits Cancel Location which is a location delete message to the MSC(OLD) 1041 (Step S1509). The MSC(OLD) 1041 that has received Cancel Location deletes information regarding the Cancel Location from the VLR 1051 which belongs to the MSC(OLD) 1041, and transmits Cancel Location Ack to the HLR 440 (Step S1510). The HLR 440 that has received the Cancel Location Ack transmits Insert Subscriber Data to the MSC(NEW) 1040 (Step S1511). The MSC(NEW) 1040 that has received Insert Subscriber Data stores subscriber information and the like included in the Insert Subscriber Data in the VLR 1050 which belongs to the MSC(NEW) 1040, and transmits Insert Subscriber Data Ack to the HLR (Step S1512). Subsequently, the HLR 440 transmits Update Location Ack to the MSC(NEW) 1040 (Step S1513).

The MSC (NEW) 1040 that has received Update Location Ack from the HLR 440 determines whether the MS 420 related to the location update is the paging suppression target terminal (Step S1514).

More specifically, the MSC(NEW) 1040 refers to the contract type of the subscriber information, the terminal type and the like included in Insert Subscriber Data received from the HLR 440 in the Step S1511, and also refers to the congestion state or the like as necessary, to determine whether the MS 420 is the paging suppression target. Note that the processing procedure as shown in Fig. 30 may be used as the determination processing.

Needless to say, other determination criteria than those shown in Fig. 30 may be set. The suppression level may be varied between the SGSN 455 which performs paging suppression in a normal telephone call and transmission and reception of data and the MSC(NEW) 1040 which performs paging suppression only in short messages, which enables flexible operations.

More specifically, when congestion occurs in case of disasters or the like, paging suppression determination may be strictly performed in telephone calls with poor use efficiency of radio resources and paging suppression determination may be performed for confirmation of safety in short messages with relatively high use efficiency of radio resources.

According to such a configuration, the MSC which treats short messages may refer to the information for specifying the paging suppression target terminal in order to perform paging suppression.

The MSC 1040 stores the paging suppression target terminal information in the VLR 1050 which belongs to the MSC 1040, and then transmits Location Update Accept to the SGSN 445 (Step S1515)

While described above is the case in which the MSC(NEW) 1040 performs the paging suppression target terminal determination processing upon receiving Update Location Ack in the Step 51513, it is not limited to this example. For example, the MSC(NEW) 1040 may perform the determination processing upon receiving Insert Subscriber data in the Step S 1511.

Further, the MSC(NEW) 1040 may perform the determination processing upon receiving Location Update Request from the SGSN 455 in the Step S1507. In this case, the SGSN 455 transmits Location Update Request in the Step S1507 together with an identifier (flag) indicating whether the terminal related to the request is the target of paging suppression.

In summary, the SGSN 455 performs processing to determine whether the terminal is the paging suppression target terminal in the Step S1504. When it is determined that the MS 420 which is the terminal related to the attachment processing is the target of paging suppression, the SGSN 455 holds the paging suppression target terminal information.

When the SGSN 455 transmits Location Update Request regarding the terminal which is the paging suppression target to the MSC(NEW) 1040, the SGSN 455 gives the identifier (flag) indicating whether the terminal is the paging suppression target terminal to the Location Update Request to transmit the Location Update Request.

The MSC(NEW) 1040 checks the identifier indicating whether the terminal is the paging suppression target terminal included in the received Location Update Request. When the identifier indicates that the terminal is the paging suppression target terminal, the MSC(NEW) 1040 holds the information for identifying the terminal as the paging suppression target terminal information. The MSC(NEW) 1040 stores the paging suppression target terminal information in the VLR 1050 which belongs to the MSC(NEW) 1040 to hold the information.

By employing such a configuration, it is possible to share the paging suppression target terminal information between the SGSN 455 and the MSC(NEW) 1040.

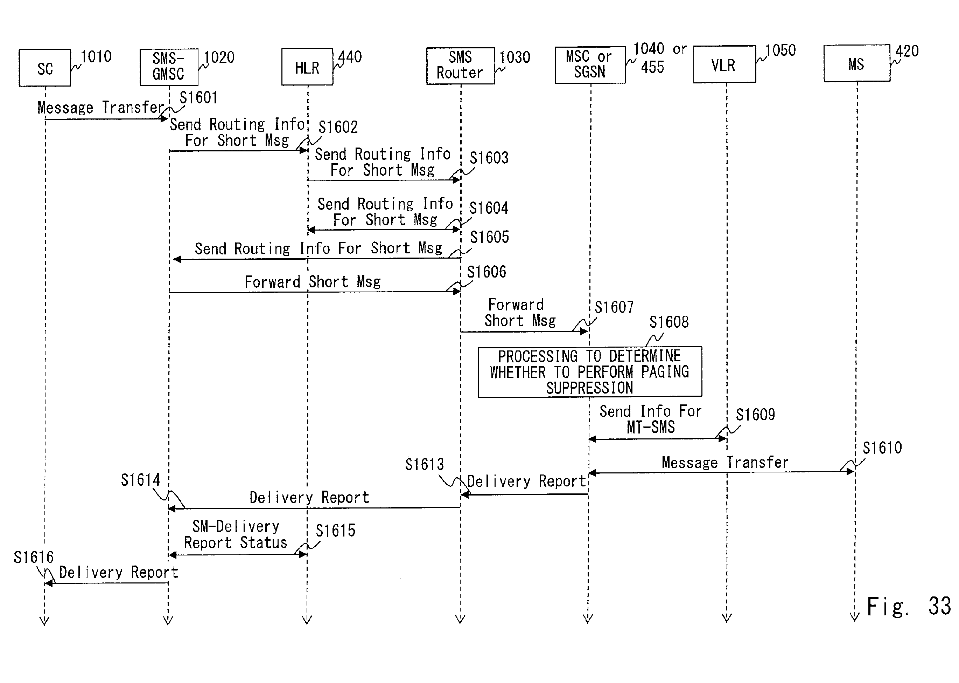

Next, the paging suppression processing performed by the SGSN 455 or the MSC 1040 will be described using a sequence diagram shown in Fig. 33.

The SC 1010 transmits the received short message to the SMS-GMSC 1020 (Step S1601). Upon receiving the short message from the SC 1010, the SMS-GMSC 1020 transmits transmission path information for short messages to the HLR 440 (Step S1602). The transmission path information is transmitted from the HLR 440 to the SMS-Router 1030 (Step S1603), and the path selection is performed between the HLR 440 and the SMS-Router 1030 (Step S1604). After that, the transmission path information is responded from the SMS-Router 1030 to the SMS-GMSC 1020 (Step S1605).

The SMS-GMSC 1020 that has received the response of the transmission path information from the SMS-Router 1030 transmits the short message to the SMS-Router 1030 according to the information included in the response (Step S1606).

The SMS-Router 1030 transmits the short message received from the SMS-GMSC 1020 to the appropriate MSC 1040 or SGSN 455 (Step S1607).

The MSC 1040 or the SGSN 455 that has received the short message determines whether to suppress paging for the short message (Step 51608). More specifically, it is determined whether the identification information indicating the destination of the short message is held as the paging suppression target terminal information.

When the MS 420 which is the destination related to the short message is not the terminal which is the paging suppression target as a result of the determination in the Step S1608, the MSC 1040 requests the VLR 1050 to transmit the transmission path information for MT-SMS to establish the transmission path (Step S1609). After that, the short message is transmitted from the MSC 1040 or the SGSN 455 to the MS 420 (Step S1610). The MSC 1040 or the SGSN 455 after transmission of the short message transmits Delivery Report to the SMS-Router 1030 (Step S1613), and the SMS-Router 1030 sends Delivery Report back to the SMS-GMSC 1020 (Step S1614).

The SMS-GMSC 1020 that has received the Delivery Report exchanges SM-Delivery Report Status with the HLR 440 (Step S1615), to transmit Delivery Report to the SC 1010 (Step S1616).

When it is determined in Step S1608 that the MSC 1040 or the SGSN 455 suppresses paging, processing in the Step S1609 and the Step S1610 is not performed. Further, in this case, the MSC 1040 or the SGSN 455 that has suppressed paging transmits Delivery Report indicating that the MS 420 is the paging suppression target to the SMS-GMSC 1020 through the SMS-Router 1030.

Further, in the paging suppression target terminal determination processing shown in Fig. 32, when the MSC 1040 stores the paging suppression target terminal information for identifying the terminal specified as the suppression target in the VLR 1050, the order of the Step S 1608 and the Step S 1609 may be reversed. More specifically, upon receiving the short message from the SMS-Router 1030, the MSC 1040 requests the VLR 1050 to transmit the transmission path information for MT-SMS or to notify that the terminal is the paging suppression target. When the MSC 1040 receives the response indicating that the MS 420 which is the destination of the short message is the paging suppression target from the VLR 1050, the MSC 1040 does not transmit the short message to the MS 420. Such a configuration is also possible.

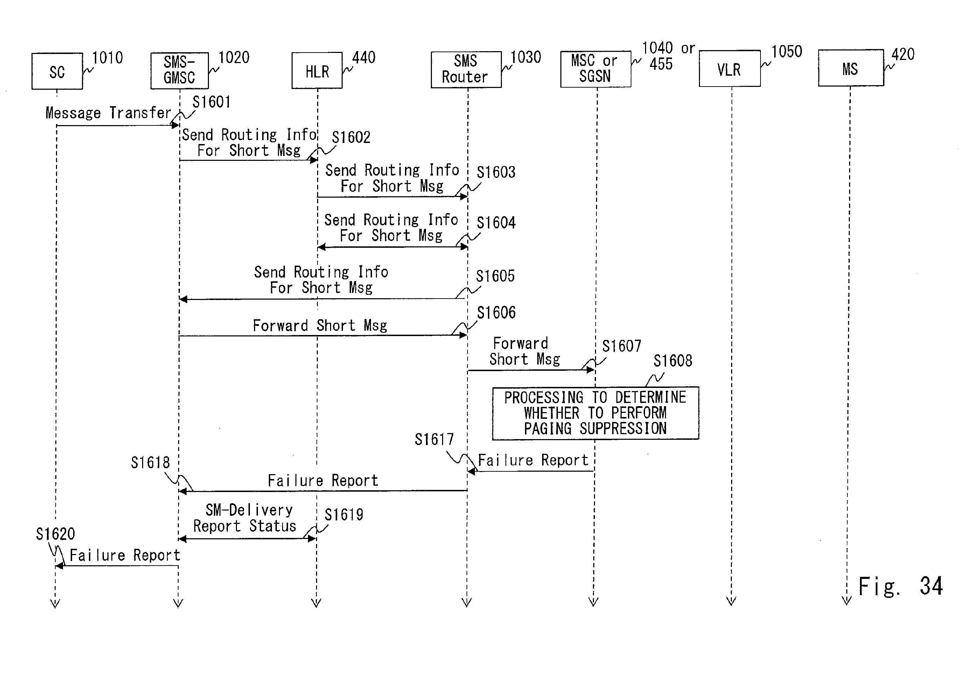

Further, the MSC 1040 or the SGSN 455 may send Failure Report indicating that the paging processing has ended in failure in place of Delivery Report as shown in Fig. 34 when performing paging suppression.

In such a case, the MSC 1040 or the SGSN 455 that has executed paging suppression transmits Failure Report indicating that the MS 420 is the paging suppression target to the SMS-GMSC 1020 through the SMS-Router 1030 after determination in the Step S1608 (Step S1617, Step S1618). The SMS-GMSC 1020 exchanges SM-Delivery Report Status with the HLR 440 (Step S1619), and transmits Failure Report to the SC 1010 (Step S1620).

Note that the SMS-Router 1030 may be omitted: in such a case, the SMS-GMSC 1020 and the SGSN 455 or the MSC 1040 may be directly connected.

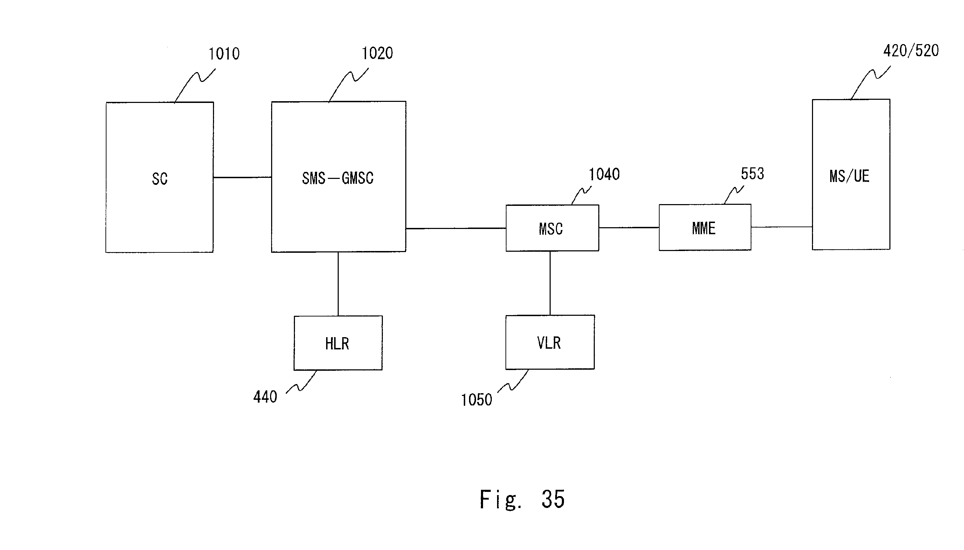

Next, description will be made of a function of suppressing a short message in a radio communication system which is an E-UTRAN system. A radio communication system which is an E-UTRAN system shown in Fig. 35 includes an SC 1010, an SMS-GMSC 1020, an MSC 1040, an HLR 440, a VLR 1050, an MME 533, and an MS 420. Fig. 35 is different from Fig. 31 in that it does not include the SGSN 455 and the SMS-Router 1030, and the short message is transmitted to the MS 420 by one path that passes the MSC 1040 from the SMS-GMSC 1020. Further, the MME 533 is arranged between the MSC 1040 and the MS 420. In Fig. 35, an eNodeB corresponding to a base station is omitted.

As a former step, as shown in Fig. 24, in the attachment processing, the determination regarding whether the terminal is the terminal which is the paging suppression target is performed and the paging suppression target terminal information is stored in the MME 533 (Step S1700).

Assume that the SC 1010 receives a short message in a state in which the paging suppression target terminal information is stored in the MME 533. In this case, the SC 1010 transmits the received short message to the SMS-GMSC 1020 (Step S1701). The SMS-GMSC 1020 that has received the short message exchanges transmission path information for transmitting the short message with the HLR 440 or the HSS 540 to specify the appropriate path (Step S1702).

Next, the SMS-GMSC 1020 transmits the short message to the MSC 1040 that is specified at the Step S1702 (Step S1703). The MSC 1040 that has received the short message performs paging request to the MME 553 (Step S1704).

The MME 553 that has received the paging request determines whether to suppress paging (Step S1705). Specifically, the MME 553 refers to the paging suppression target terminal information stored in the Step S 1700 to determine whether to execute paging to the eNodeB 510.

When the MME 553 determines that the paging is to be executed, paging is performed from the MME 553 to the eNodeB 510, and further paging to the UE 520 is performed. On the other hand, the MME 530 suppresses the paging for the terminal corresponding to the identifier of the suppression target terminal.

When the MME 553 determines in Step S1705 that the paging to the eNodeB 510 is to be suppressed, the terminal (UE 520) related to the paging sends Paging Reject including the information indicating that the terminal is the paging suppression target back to the MSC 1040 (Step S 1706).

The MSC 1040 that has received the Paging Reject transmits Delivery Report to the SMS-GMSC 1020, and the SMS-GMSC 1020 transmits Delivery Report to the SC 1010.

When the MSC 1040 holds the paging suppression target terminal information in the VLR 1050, instead of performing the determination regarding whether to suppress paging by the MME 553, the MSC 1040 may perform the determination upon receiving the short message in the Step S1703.

As described above, the MSC according to the twelfth exemplary embodiment includes paging suppression target terminal determination means that determines whether the terminal related to the location update request is the terminal which is the target of paging suppression, and paging suppression necessity determination means that determines (judges) whether to suppress paging when the short message is received.

Since the MSC has such a configuration, it is possible to appropriately stop the short mail even when it is transmitted through the MSC instead of the SGSN.

The paging suppression target terminal determination means further includes storage means that stores information regarding whether to suppress the paging obtained by the determination in the subscriber information database (VLR). The VLR is normally included in the MSC, which makes it possible to store the paging suppression target terminal information in the VLR. The paging suppression necessity determination means refers to the VLR, and suppresses the paging when the destination of the short message received by the receiving means is stored in the VLR as the terminal which is the target of paging suppression. It is possible to employ such a configuration.

As described above in each of the exemplary embodiments, according to the present invention, it is possible to prevent occurrence of unnecessary paging processing by incorporating the paging suppression function into the mobile communication system, thereby being able to mitigate the network load and the device load.

Various options may be considered regarding with which node the suppression target terminal is specified and with which node paging suppression is to be performed.

As described above, for example, in the fourth exemplary embodiment stated above, the processing to determine whether the terminal is the paging suppression target terminal is performed in the SGSN which is a lower order packet switchboard in UTRAN. The SGSN determines whether the MS which has transmitted the connection request is the terminal which is the target of paging suppression (paging suppression target terminal) when receiving Activate PDP Context Request which is the connection request by a receiving unit. When the SGSN determines that the MS is the paging suppression target terminal, the SGSN includes (adds) the information indicating the paging suppression target terminal in Create PDP Context Request to transmit Create PDP Context Request to the GGSN. When the information indicating the paging suppression target terminal is added (included) to the Request, the GGSN that has received Create PDP Context Request stores the identifier for identifying the MS specified by the Request in the storage unit as the paging suppression target terminal information. When PDP PDU which is a user packet is received from an external network in this state, the GGSN checks whether the identifier of the MS which is the destination of the packet of the PDP PDU is stored as the paging suppression target terminal information. When the identifier of the MS which is the destination of the packet of the PDP PDU is stored as the paging suppression target terminal information, the GGSN suppresses paging, whereby the incoming call control is performed.

Also in the sixth exemplary embodiment, the SGSN determines the paging suppression target terminal, and the GGSN determines whether to perform paging suppression. In the sixth exemplary embodiment, it is determined whether the terminal is the paging suppression target terminal at the time of location registration to store the identifier for identifying the MS. The time of the location registration means a predetermined timing in a series of location registration processing, and includes a timing at which Attach Request is received from the MS and a timing at which Insert Subscriber data is received from the HLR. When Activate PDP Context which is a connection request (communication start request) is received by the MS, it is checked whether the identifier that identifies the MS is stored as the paging suppression target terminal at the time of location registration, thereby determining whether the MS related to the connection request is the paging suppression target terminal. When it is determined that the MS related to the connection request is the paging suppression target terminal, the SGSN includes (adds) the information indicating that the terminal is the paging suppression target terminal in Create PDP Context Request to transmit Create PDP Context Request to the GGSN. Then it is determined in the GGSN whether to suppress paging for PDP PDU received from the external network, as is similar to the fourth exemplary embodiment. In this way, it is determined whether the terminal is the paging suppression target terminal at the time of location registration. For the connection request, it is only necessary to determine whether the MS related to the connection request is the paging suppression target terminal by referring to the determination result. Accordingly, it is possible to reduce time required from the connection request to the start of the communication.

Further, as described above, for example, in the fifth exemplary embodiment, processing to determine whether the terminal is the paging suppression target terminal is performed in the MME which performs mobility management in the E-UTRAN. When the MME determines that the terminal is the paging suppression target terminal, the MME adds (includes) the information indicating that the terminal is the paging suppression target terminal to Create Session Request to transmit Create Session Request to the P-GW through the S-GW. When the information indicating that the terminal is the paging suppression target terminal is added (included) to the Request, the P-GW that has received Create Session Request stores the identifier for identifying the UE specified by the Request in the storage unit as the paging suppression target terminal information. When Downlink Data which is the user packet is received from the external network in this state, the P-GW checks whether the identifier of the UE which is the destination of the packet of the Downlink Data is stored in the paging suppression target terminal information. When the identifier of the UE which is the destination of the packet of the Downlink Data is stored in the paging suppression target terminal information, the P-GW suppresses paging, whereby the incoming call control is performed.

As described above, in the fourth to sixth exemplary embodiments, incoming call control is performed in the GGSN or the P-GW which is a node connected to the external network. Accordingly, even when the packet for the paging suppression target terminal is received from the external network, communication to a lower order node does not occur, thereby being able to mitigate the load applied to the network.

On the other hand, in the seventh exemplary embodiment, it is determined whether the SGSN is the paging suppression target terminal at the time of location registration, and information regarding the paging suppression target terminal is stored. Then, when the SGSN receives PDU Notification Request for requesting activation of the PDP context from the GGSN which is a higher order node, it is determined whether to suppress paging. In this way, the paging suppression target terminal information is also managed by the SGSN that manages the subscriber information in advance, thereby being able to use the GGSN which is a higher order packet switchboard without changing its configuration.

Further, in the eighth exemplary embodiment, the S-GW performs determination of paging suppression in E-UTRAN. The determination of paging suppression is performed by the S-GW arranged for each area of the mobile communication network in place of the P-GW connected to the external network, thereby being able to correspond to roaming.

Further, in the ninth exemplary embodiment, the MME performs determination of paging suppression. Since the MME is a node that performs mobile management, it is preferable to manage the paging suppression target terminal information as well by the MME in terms of the design of the network. Thus, when the Downlink Data Notification is the notification of the packet for the paging suppression target terminal based on Downlink Data Notification transmitted from the S-GW, paging is suppressed to perform incoming call control. By employing such a configuration, it is possible to incorporate the incoming call control function in the network without greatly changing the network.

Further, as described in the tenth exemplary embodiment, information regarding the terminal which is the target of paging suppression is transmitted or received between the MME and the SGSN using Context Request and Context Response, thereby being able to incorporate the incoming call control function without any great change even in a system in which UTRAN and E-UTRAN are mixed.

Note that the present invention is not limited to the exemplary embodiments stated above but a function that executes processing to determine whether the terminal is the paging suppression target terminal may be included in an apparatus that performs paging processing also in future radio communication systems, thereby being able to suppress unnecessary paging.

While the case in which the incoming call control apparatus and the paging suppression target terminal specifying apparatus are different has been described in the description above, it is not limited to this case. One apparatus may include both of the incoming call control function and the paging suppression target terminal specifying function stated above.

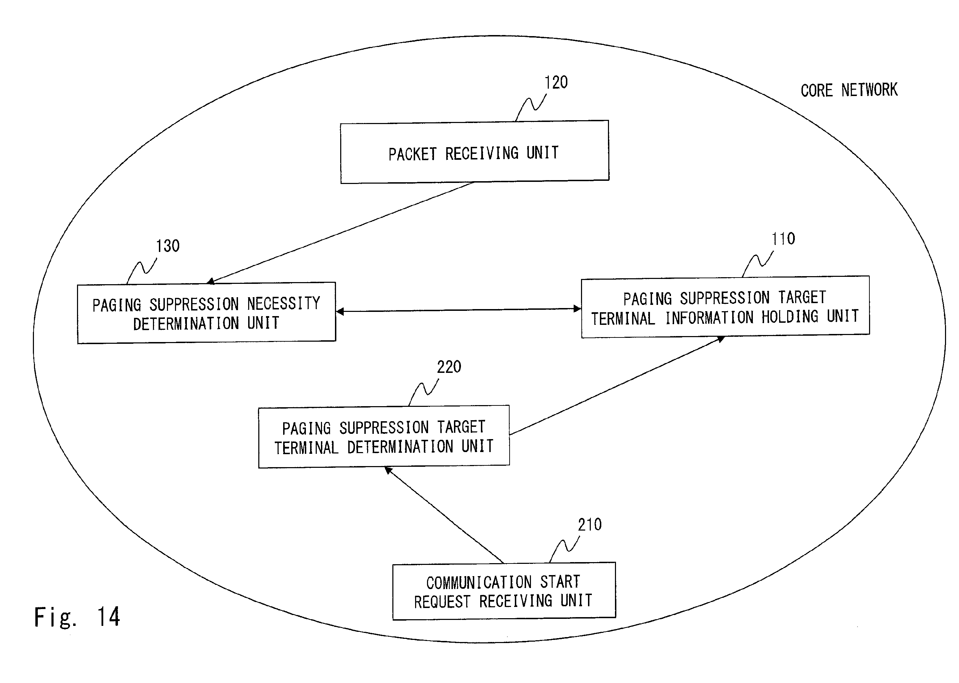

Specifically, the incoming call control system including the incoming call control function according to the present invention includes, as shown in Fig. 14, each part of the communication start request receiving unit 210, the paging suppression target terminal determination unit 220, the paging suppression target terminal information holding unit 110, the paging suppression necessity determination unit 120, and the packet receiving unit 120 arranged in the core network of the mobile communication system.

While the present invention has been described as a hardware configuration in the exemplary embodiments described above, the present invention is not limited to this. The present invention may achieve arbitrary processing by causing a central processing unit (CPU) to execute a computer program.

Further, each program described above can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g. magneto-optical disks), CD-ROM (Read Only Memory), CD-R, CD-R/W, and semiconductor memories (such as mask ROM, PROM (Programmable ROM), EPROM (Erasable PROM), flash ROM, RAM (random access memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

Further, each apparatus may hold the paging suppression target terminal information by listing the identification information that identifies the terminal which is the target of paging suppression or may hold the paging suppression target terminal information with a flag indicating the terminal which is the target of paging suppression for each identification information for identifying each terminal.

While the present invention has been described above with reference to exemplary embodiments, the present invention is not limited to the exemplary embodiments stated above. The configuration and details of the present invention can be modified in various manners which can be understood by those skilled in the art within the scope of the invention. For example, the following forms may be employed.

### (Supplementary note 1)

An incoming call control apparatus comprising: holding means that holds paging suppression target terminal information regarding a radio communication terminal which is a target of paging suppression; packet reception means that receives a packet from a network side; and determination means that determines whether to suppress paging to a radio communication terminal related to the received packet based on the paging suppression target terminal information.

### (Supplementary note 2)

The incoming call control apparatus according to (Supplementary note 1), wherein the packet reception means receives PDP PDU as the packet, and upon determining that paging to a radio communication terminal related to the received PDP PDU is not suppressed, the determination means transmits PDP Notification Request to a packet switchboard SGSN to start paging processing.

### (Supplementary note 3)

The incoming call control apparatus according to (Supplementary note 1), wherein the packet reception means receives Downlink Data as the packet, and upon determining that paging to a radio communication terminal to which the received Downlink Data is transmitted is not suppressed, the determination means transmits Downlink Data Notification to a gateway device S-GW to start paging processing.

### (Supplementary note 4)

An incoming call control target terminal specifying apparatus comprising: communication start request reception means that receives a communication start request transmitted from a radio communication terminal; determination means that determines whether the radio communication terminal related to the received communication start request is a terminal which is a target of paging suppression; and notification means that notifies information for identifying the radio communication terminal as paging suppression target terminal information when the determination means determines that the terminal is the target of paging suppression.

### (Supplementary note 5)

The incoming call control target terminal specifying apparatus according to (Supplementary note 4), further comprising subscriber information storage means that stores subscriber information of a radio communication terminal which is located in an area under a control of the incoming call control target terminal specifying apparatus, wherein the determination means refers to the subscriber information of the radio communication terminal related to the received communication start request to determine whether the radio communication terminal related to the communication start request is the terminal which is the target of paging suppression.

### (Supplementary note 6)

The incoming call control target terminal specifying apparatus according to (Supplementary note 5), wherein: the subscriber information comprises contract information including contents related to paging suppression, and the determination means determines whether the radio communication terminal related to the communication start request is the terminal which is the target of paging suppression based on contract information of the radio communication terminal related to the received communication start request.

### (Supplementary note 7)

The incoming call control target terminal specifying apparatus according to (Supplementary note 5), wherein: the subscriber information comprises information regarding a terminal type, and the determination means determines whether the radio communication terminal related to the communication start request is the terminal which is the target of paging suppression based on the terminal type of the radio communication terminal related to the received communication start request.

### (Supplementary note 8)

The incoming call control target terminal specifying apparatus according to (Supplementary note 5) to (Supplementary note 7), further comprising congestion detection means that detects whether congestion occurs, wherein the determination means determines whether the radio communication terminal related to the communication start request is the terminal which is the target of paging suppression based on whether the congestion occurs.

### (Supplementary note 9)

The incoming call control target terminal specifying apparatus according to (Supplementary note 4) to (Supplementary note 8), wherein: the communication start request reception means receives Activate PDP Context Request transmitted from a radio communication terminal as the communication start request, the determination means determines whether the radio communication terminal related to the received Activate PDP Context Request is the terminal which is the target of paging suppression, and the notification means includes the paging suppression target terminal information in Create PDP Context response to notify Create PDP Context response.

### (Supplementary note 10)

The incoming call control target terminal specifying apparatus according to (Supplementary note 4) to (Supplementary note 8), wherein: the communication start request reception means receives Attach Request transmitted from a radio communication terminal as the communication start request, the determination means determines whether the radio communication terminal related to the received Attach Request is the terminal which is the target of paging suppression, and the notification means includes the paging suppression target terminal information in Create Session Request to notify Create Session Request.

### (Supplementary note 11)

The incoming call control target terminal specifying apparatus according to (Supplementary note 10), wherein the determination means determines whether the radio communication terminal is the target of paging suppression upon receiving Update Location Ack indicating that location registration update of the radio communication terminal related to the received Attach Request is completed.

### (Supplementary note 12)

An incoming call control method comprising: a holding step that holds paging suppression target terminal information regarding a radio communication terminal which is a target of paging suppression; a packet reception step that receives a packet from a network side; and a determination step that determines whether to suppress paging to a radio communication terminal related to the received packet based on the paging suppression target terminal information.

### (Supplementary note 13)

An incoming call control target terminal specifying method comprising: a communication start request reception step that receives a communication start request transmitted from a radio communication terminal; a determination step that determines whether the radio communication terminal related to the received communication start request is a terminal which is a target of paging suppression; and a notification step that notifies, when it is determined in the determination step that the radio communication terminal is the target of paging suppression, information for identifying the radio communication terminal as paging suppression target terminal information.

### (Supplementary note 14)

An incoming call control system comprising: communication start request reception means that receives a communication start request transmitted from a radio communication terminal; determination means that determines whether the radio communication terminal related to the received communication start request is a terminal which is a target of paging suppression; holding means that holds information for identifying the radio communication terminal as paging suppression target terminal information when the determination means determines that the terminal is the target of paging suppression; packet reception means that receives a packet from a network side; and determination means that determines whether to suppress paging to a radio communication terminal related to the received packet based on the paging suppression target terminal information.

### (Supplementary note 15)

A subscriber packet switchboard (SGSN) or a mobile management control apparatus (MME) comprising:
receiving means that receives a location registration request from a radio communication terminal;
determination means that determines whether the radio communication terminal is a terminal which is a target of paging suppression; and
transmitting means that transmits information indicating the target of paging suppression when it is determined in the determination means that the terminal is the target of paging suppression.

### (Supplementary note 16)

The subscriber packet switchboard or the mobile management control apparatus according to Supplementary note 15, wherein:
the receiving means receives subscriber information (Insert Subscriber Data or Update Location Ack) from a subscriber information database (HLR or HSS), and
the determination means determines whether the radio communication terminal is the target of paging suppression based on the subscriber information.

### (Supplementary note 17)

The subscriber packet switchboard or the mobile management control apparatus according to Supplementary note 16, wherein:
the receiving means receives a connection request (communication start request) from the radio communication terminal, and
the transmitting means transmits information indicating the target of paging suppression together with a request for generating a PDP context.

### (Supplementary note 18)

The subscriber packet switchboard or the mobile management control apparatus according to Supplementary note 17, further comprising storage means that stores information for identifying the radio communication terminal which is determined to be the terminal which is the target of paging suppression based on the subscriber information, wherein:
the determination means determines whether the radio communication terminal which has transmitted the received connection request is the terminal which is the target of paging suppression based on the information for identifying the terminal which is the target of paging suppression stored in the storage means, and
the transmitting means transmits, when it is determined that the terminal is the target of paging suppression, information indicating the target of paging suppression together with the request for generating the PDP context.

### (Supplementary note 19)

A subscriber packet switchboard or a mobile management control apparatus comprising:
receiving means that receives a location registration request from a radio communication terminal; determination means that determines whether the radio communication terminal is a terminal which is a target of paging suppression;
storage means that stores information regarding a radio communication terminal which is determined to be the terminal which is the target of paging suppression; and
determination means that refers to information regarding the stored radio communication terminal to determine whether to perform paging suppression.

### (Supplementary note 20)

The mobile management control apparatus according to Supplementary note 19, wherein:
the receiving means receives Context Request which is a request of subscriber information from the subscriber packet switchboard,
the determination means determines whether information for identifying a radio communication terminal related to the Context Request is stored in the storage means as information for identifying the terminal which is the target of paging suppression, and
when the information is stored in the storage means as a result of the determination, the transmitting means adds information indicating the terminal which is the target of paging suppression to Context Response to transmit Context Response to the subscriber packet switchboard.

### (Supplementary note 21)

The subscriber packet switchboard according to Supplementary note 19, wherein:
the receiving means receives Context Request which is a request of subscriber information from the mobile management control apparatus,
the determination means determines whether information for identifying a radio communication terminal related to the Context Request is stored in the storage means as information for identifying the terminal which is the target of paging suppression, and
when the information is stored in the storage means as a result of the determination, the transmitting means adds information indicating the terminal which is the target of paging suppression to Context Response to transmit Context Response to the mobile management control apparatus.

### (Supplementary note 22)

The mobile management control apparatus according to Supplementary note 20, wherein:
the receiving means receives TAU Request from the radio communication terminal, and
the transmitting means transmits the Context Request to the subscriber packet switchboard based on the TAU Request.

### (Supplementary note 23)

The subscriber packet switchboard according to Supplementary note 21, wherein:
the receiving means receives RAU Request from the radio communication terminal, and
the transmitting means transmits the Context Request to the mobile management control apparatus based on the RAU Request.

### (Supplementary note 23)

The subscriber packet switchboard or the mobile management control apparatus according to Supplementary note 19, wherein:
the receiving means receives one of PDU Notification Request and Downlink Data Notification, and
the determination means determines whether to suppress paging based on one of PDU Notification Request and Downlink Data Notification received by the receiving means.

### (Supplementary note 24)

A gateway device (S-GW) comprising:
receiving means that receives Create Session Request from a mobile management control apparatus and receives, from a higher order gateway device (P-GW), Downlink Data which is an incoming packet from a network,
storage means that stores information regarding a terminal which is a target of paging suppression when information regarding the terminal which is the target of paging suppression is included in the Create Session Request; and
determination means that refers to the information regarding the terminal which is the target of paging suppression stored in the storage means to determine whether to suppress paging based on the Downlink Data.

### (Supplementary note 25)

A mobile switching center (MSC) comprising:
receiving means that receives a location update request from a subscriber packet switchboard (SGSN) and receives subscriber information (Insert Subscriber Data) from a subscriber information database (HLR or HSS);
paging suppression target terminal determination means that determines whether a terminal related to the location update request is a terminal which is a target of paging suppression; and
paging suppression necessity determination means that determines whether to suppress paging when the receiving means receives a short message.

### (Supplementary note 26)

The mobile switching center (MSC) according to Supplementary note 25, wherein:
the paging suppression target terminal determination means further comprises storage means that stores the information regarding whether to suppress paging obtained by the determination in a subscriber information database (VLR), and
the paging suppression necessity determination means suppresses the paging when a destination of the short message received by the receiving means is stored in the subscriber information database (VLR) as the terminal which is the target of paging suppression.

### (Supplementary note 27)

The mobile switching center (MSC) according to Supplementary note 26, further comprising check means that checks whether an identifier indicating the terminal which is the target of paging suppression is included in the location update request received by the receiving means,
wherein, when the identifier is included as a result of the check by the check means, the storage means determines the terminal related to the location update request as the terminal which is the target of paging suppression to store information regarding whether to suppress the paging in the subscriber information database (VLR).

This application is based upon and claims the benefit of priority from Japanese Patent Application No. 2011-212319, filed on September 28, 2011, Japanese Patent Application No. 2012-012909, filed on January 25, 2012, and Japanese Patent Application No. 2012-021950, filed on February 3, 2012, the disclosures of which are incorporated herein in its entirety by reference

### Industrial Applicability

The present invention relates to a mobile communication system including an incoming call control function.

### Reference Signs List

10A-10C BASE STATION
20A-20E RADIO COMMUNICATION TERMINAL
100 INCOMING CALL CONTROL APPARATUS
110 PAGING SUPPRESSION TARGET TERMINAL INFORMATION HOLDING UNIT
120 PACKET RECEIVING UNIT
130 PAGING SUPPRESSION NECESSITY DETERMINATION UNIT
200 PAGING SUPPRESSION TARGET TERMINAL SPECIFYING APPARATUS
210 COMMUNICATION START REQUEST RECEIVING UNIT
220 PAGING SUPPRESSION TARGET TERMINAL DETERMINATION UNIT
230 PAGING SUPPRESSION TARGET TERMINAL INFORMATION NOTIFICATION UNIT
300 PAGING SUPPRESSION TARGET TERMINAL SPECIFYING APPARATUS
320 PAGING SUPPRESSION TARGET TERMINAL DETERMINATION UNIT
340 SUBSCRIBER INFORMATION HOLDING UNIT
350 CONGESTION STATE DETECTION UNIT
360 PAGING SUPPRESSION TARGET TIME MANAGEMENT UNIT
410 BTS (BASE STATION)
420 MS (MOBILE STATION)
430 RNC (RADIO NETWORK CONTROLLER)
440 HLR (SUBSCRIBER INFORMATION MANAGEMENT APPARATUS)
450 SGSN (PACKET SWITCHBOARD)
460 GGSN (PACKET SWITCHBOARD)
510 UE (RADIO COMMUNICATION TERMINAL)
520 eNB (BASE STATION)
530 MME (MOBILITY MANAGEMENT NODE)
540 HSS (SUBSCRIBER INFORMATION MANAGEMENT APPARATUS)
550 S-GW (GATEWAY DEVICE)
560 P-GW (GATEWAY DEVICE)
570 PCRF (SUBSCRIBER POLICY/CHARGING RULES MANAGEMENT APPARATUS)
610 RECEIVING UNIT
620 PAGING SUPPRESSION TARGET TERMINAL DETERMINATION UNIT
630 NOTIFICATION INFORMATION GENERATION UNIT
640 TRANSMITTING UNIT
710 RECEIVING UNIT
720 PAGING SUPPRESSION TARGET TERMINAL DETERMINATION UNIT
730 PAGING SUPPRESSION TARGET TERMINAL INFORMATION HOLDING UNIT
740 PAGING SUPPRESSION NECESSITY DETERMINATION UNIT
(INCOMING CALL CONTROLLER)
750 NOTIFICATION INFORMATION GENERATION UNIT
760 TRANSMITTING UNIT
810 RECEIVING UNIT
820 PAGING SUPPRESSION TARGET TERMINAL DETERMINATION UNIT
830 PAGING SUPPRESSION TARGET TERMINAL INFORMATION HOLDING UNIT
840 PAGING SUPPRESSION NECESSITY DETERMINATION UNIT
(INCOMING CALL CONTROLLER)
850 NOTIFICATION INFORMATION GENERATION UNIT
860 TRANSMITTING UNIT
1000, 2000 MOBILE COMMUNICATION SYSTEM
1010 SC (SHORT MESSAGE MANAGEMENT APPARATUS)
1020 SMS-GMSC (SHORT MESSAGE TRANSFER APPARATUS)
1030 SMS-Router (SHORT MESSAGE RELAY APPARATUS)
1040 MSC (SERVICE SWITCHING DEVICE)
1050 VLR (SUBSCRIBER INFORMATION MANAGEMENT APPARATUS)
4000 MOBILE COMMUNICATION SYSTEM (UTRAN)
5000 MOBILE COMMUNICATION SYSTEM (E-UTRAN)

## Claims

1. An incoming call control system comprising:
communication start request reception means that receives a communication start request transmitted from a radio communication terminal;
determination means that determines whether the radio communication terminal related to the received communication start request is a terminal which is a target of paging suppression;
holding means that holds information for identifying the radio communication terminal as paging suppression target terminal information when the determination means determines that the terminal is the target of paging suppression;
packet reception means that receives a packet from a network side; and
determination means that determines whether to suppress paging to a radio communication terminal related to the received packet based on the paging suppression target terminal information.

2. An incoming call control apparatus comprising:
holding means that holds paging suppression target terminal information regarding a radio communication terminal which is a target of paging suppression;
packet reception means that receives a packet from a network side; and
determination means that determines whether to suppress paging to a radio communication terminal related to the received packet based on the paging suppression target terminal information.

3. An incoming call control target terminal specifying apparatus comprising:
communication start request reception means that receives a communication start request transmitted from a radio communication terminal;
determination means that determines whether the radio communication terminal related to the received communication start request is a terminal which is a target of paging suppression; and
notification means that notifies information for identifying the radio communication terminal as paging suppression target terminal information when the determination means determines that the terminal is the target of paging suppression.

4. The incoming call control target terminal specifying apparatus according to Claim 3, further comprising subscriber information storage means that stores subscriber information of a radio communication terminal which is located in an area under a control of the incoming call control target terminal specifying apparatus,
wherein the determination means refers to the subscriber information of the radio communication terminal related to the received communication start request to determine whether the radio communication terminal related to the communication start request is the terminal which is the target of paging suppression.

5. The incoming call control target terminal specifying apparatus according to Claim 4, wherein:
the subscriber information comprises contract information including contents related to paging suppression, and
the determination means determines whether the radio communication terminal related to the communication start request is the terminal which is the target of paging suppression based on contract information of the radio communication terminal related to the received communication start request.

6. The incoming call control target terminal specifying apparatus according to Claim 4, wherein:
the subscriber information comprises information regarding a terminal type, and
the determination means determines whether the radio communication terminal related to the communication start request is the terminal which is the target of paging suppression based on the terminal type of the radio communication terminal related to the received communication start request.

7. The incoming call control target terminal specifying apparatus according to any one of Claims 4 to 6, further comprising congestion detection means that detects whether congestion occurs,
wherein the determination means determines whether the radio communication terminal related to the communication start request is the terminal which is the target of paging suppression based on whether the congestion occurs.

8. The incoming call control target terminal specifying apparatus according to any one of Claims 3 to 7, wherein:
the communication start request reception means receives Activate PDP Context Request transmitted from a radio communication terminal as the communication start request,
the determination means determines whether the radio communication terminal related to the received Activate PDP Context Request is the terminal which is the target of paging suppression, and
the notification means includes the paging suppression target terminal information in Create PDP Context response to notify Create PDP Context response.

9. The incoming call control target terminal specifying apparatus according to any one of Claims 3 to 7, wherein:
the communication start request reception means receives Attach Request transmitted from a radio communication terminal as the communication start request,
the determination means determines whether the radio communication terminal related to the received Attach Request is the terminal which is the target of paging suppression, and
the notification means includes the paging suppression target terminal information in Create Session Request to notify Create Session Request.

10. An incoming call control method comprising:
a holding step that holds paging suppression target terminal information regarding a radio communication terminal which is a target of paging suppression;
a packet reception step that receives a packet from a network side; and
a determination step that determines whether to suppress paging to a radio communication terminal related to the received packet based on the paging suppression target terminal information.
